Europäisches Patentamt

(19) European Patent Office

Office européen des brevets

(11) Publication number: **0 097 488**
**B1**

(12) **EUROPEAN PATENT SPECIFICATION**

(45) Date of publication of patent specification: **14.01.87**

(51) Int. Cl.⁴: **G 21 D 3/12**

(21) Application number: **83303468.9**

(22) Date of filing: **15.06.83**

(54) **Method for controlling a nuclear fueled electric power generating unit and interfacing the same with a load dispatching system.**

(30) Priority: **17.06.82 US 389511**

(43) Date of publication of application:
**04.01.84 Bulletin 84/01**

(45) Publication of the grant of the patent:
**14.01.87 Bulletin 87/03**

(84) Designated Contracting States:
**BE DE SE**

(56) References cited:
**EP-A-0 026 563**
**FR-A-2 283 515**
**FR-A-2 378 335**
**US-A-3 849 637**
**US-A-3 933 580**
**US-A-4 236 220**

**IEEE TRANSACTIONS ON NUCLEAR SCIENCE,
vol. NS-20, no. 1, 1973, pages 724-735, New
York, USA J.E. SMITH: "Experience with
process control computers in the Canadian
nuclear power program"**

**NUCLEAR ENGINEERING INTERNATIONAL,
vol. 19, no. 221, October 1974, pages 846-850,
London, GB. W.M. JACOBI: "The Clinch River
breeder reactor project nuclear steam supply
system"**

(73) Proprietor: **WESTINGHOUSE ELECTRIC
CORPORATION**
**Westinghouse Building Gateway Center
Pittsburgh Pennsylvania 15235 (US)**

(72) Inventor: **Mueller, Norman Paul**
**P.O. Box 134, Route 1**
**Trafford Pennsylvania (US)**
Inventor: **Meyer, Charles Ervin**
**931 Harvard Road**
**Monroeville Pennsylvania (US)**

(74) Representative: **van Berlyn, Ronald Gilbert et al**
**23, Centre Heights**
**London, NW3 6JG (GB)**

## Description

This invention relates to a method for controlling a nuclear fueled electric power generating unit by generating on-line, real time representations of the rapid power change capability of the unit and is especially useful in interfacing the unit with a network dispatching system.

In an electric power generating network incorporating a plurality of power generating units, some of the units are run continuously at full power to provide for the base load. The power output of other units is varied to follow the variable portion of the load and to regulate the power output. It is common practice to control the generating unit in the network automatically through a central dispatching scheme which allocates the portion of the network load to be carried by each individual unit in accordance with a pattern which generates the required power in the most economical manner while providing sufficient spinning reserve to accommodate any increase in load or the unexpected loss of a generating unit. The modern dispatch system utilizes a digital computer that rapidly and continually, at intervals of one to four minutes, solves the load distribution problem and updates the allocation of load to the individual generating units. This requires that the dispatch system be supplied with the operating status and rapid power change capability of each unit in the network on a comparable time scale.

Because of their high capital cost and relatively inexpensive fuel costs, nuclear power plants have traditionally been base loaded, that is, run at full power continuously to supply the base load. However, as the nuclear capacity in a network increases, there comes a time when the nuclear plants can no longer all be base loaded, but at least some must load follow. Unfortunately, though, the rapid power change capability of the nuclear generating unit is not easily determined as in the case of fossil fueled or hydroelectric plants. This has lead to the practice of the nuclear plant operator calling in to the dispatcher by telephone his estimation of the rapid power change capability of his unit or in the use by the automatic dispatching system of a predetermined fixed step change capability. The former practice, of course, takes considerable time while the latter results in less than optimal results since the fixed step change is a conservative figure and often a large rapid power change can be accommodated by the nuclear generating unit through a ramp change as opposed to a step change.

The difficulty in determining on an on-line, real time basis the rapid power change capability of a nuclear generating unit is that the ability of the nuclear reactor to change its power level on a short term basis depends not only upon the present state of the reactor but upon its past history. This is due to the fact that, as a byproduct of the fission reaction, xenon is formed. Xenon has a very high cross section for neutron absorption and, in effect, poisons the reactor, limiting its ability to increase power output rapidly. The time constants for the generation and decay of the xenon are such that the real time level of the xenon in the reactor is a function of the operating level of the reactor over the past several hours and, for practical purposes, does not change over the cycle time of one to four minutes used by the dispatch system.

The difficulty in determining the rapid power change capability of a nuclear generating plant is not only due to the amount of xenon present, but also to its distribution in the reactor. This phenomenon can best be understood by considering the manner in which a nuclear reactor is controlled. The fissionable material is contained in fuel rods which are oriented vertically in the reactor. A reactor coolant, ordinary water in the case of the Pressurized Water Reactor (PWR), circulates around the fuel rods and is heated by the thermal energy released by the fission reactions. In the fission reaction, the uranium atoms split releasing a number of neutrons in addition to the thermal energy. Some of the neutrons escape and others are absorbed or captured, for instance, by the xenon present, but still others split another atom to keep the reaction going. However, the neutrons released by splitting of an atom are traveling too fast to split another atom and must first be slowed down to the critical energy level. The coolant acts as a moderator which reduces the energy level of the neutrons to the required level. In order to control the fission rate, boron is dissolved in the coolant. The boron absorbs neutrons so that, by controlling the coolant boron level, the reactivity of the reactor can be regulated. Since there is a large volume of coolant, changes in reactivity effected through the boron control system require a substantial amount of time and are used, therefore, to make long term adjustments in reactivity.

Another means of controlling the reactivity of a nuclear reactor is the control rod system. The control rods are inserted vertically into the reactor between the fuel rods to absorb neutrons and thereby regulate the fission rate. Since the control rods are mechanically positioned and their effect on the fission reactions is immediate, they represent the most rapid means of controlling the reactor reactivity.

A third mechanism by which the power output of a nuclear power unit is affected is through changes in the reactor coolant temperature. The thermal energy transferred to the reactor coolant is used to generate electric power in a steam turbine-generator combination. If additional load is placed on the nuclear generating unit by opening the turbine throttle valve, the increase in energy utilization by the turbine-generator will result in a decrease in the reactor coolant temperature. This drop in reactor coolant temperature increases its moderating effect so that more neutrons are slowed to the critical velocity and therefore the power output of the reactor is increased. This, of course, will also increase the coolant temperature until an equilibrium state is reached.

The three means by which reactor power output is varied do not all have the same effect on power distribution in the reactor. Under ideal conditions, the highest power level in the reactor occurs at the center of the cylindrical reactor core and tapers off in the radial and both vertical directions since more of the neutrons escape as the periphery of the core is approached. Since boron control and temperature reduction act through the reactor coolant which circulates throughout the core, they have little disturbing effect on this ideal pattern of reactor power distribution. However, the control rods, which are inserted and withdrawn vertically from above the core, do distort the ideal power distribution pattern in the vertical direction. The distorting effect is compounded by the presence of the xenon which becomes distributed vertically in accordance with the past history of the power distribution. The amount by which the location of the maximum power level in the vertical direction deviates from the vertical midpoint of the core is referred to as the axial offset and can be either positive or negative depending upon whether it is located above or below the midpoint, respectively. Each reactor has a target axial offset which is the desired location of the maximum power point in the vertical direction, and this offset, which can be positive or negative, changes during the fuel cycle.

The amount of permissible deviation from the target axial offset is a function of the total power level of the reactor. At lower power levels, larger axial offsets are tolerated while at higher total power levels, the axial offset must be confined within narrow bands around the target offset. Since rod control has a direct effect on axial offset, the amount of rod travel, and hence a large portion of the rapid power change capability of the reactor, depends upon the current total power level and axial offset, with the latter, of course, being a function of the past history of the reactor as manifested by the xenon distribution.

The amount of rapid power change available through a reduction in reactor coolant temperature is also limited. It is a function of plant design, and control and protection limitations. Furthermore, the two rapid means for changing reactor output, rod control, and reactor coolant temperature reduction are interrelated.

In summary, the power restrictions on a nuclear power plant generally depend on both the current power level and the axial core power distribution. Either of the factors can be limiting. For example, it is possible to be operating at 50% power with the power skewed toward the top of the core to such a degree that further power increases are not possible without violating technical specifications. If a nuclear plant is remotely dispatched and the axial power distribution is ignored, the dispatcher does not know of any restrictions on plant capabilities until the protection system (or plant operator) defeats further remote dispatching to prevent a plant trip, a violation of technical specifications and/or a forced power reduction. This sudden loss of expected capabilities could result in a serious, prolonged economic penalty (as standby plants are brought on line, for example), a curtailment in the ability of the network to meet its load demand (resulting in off-nominal voltage or frequency operation), and/or possibly a loss of network stability (requiring load shedding) due to the inability of the plant to supply spinning reserve.

Evaluation of the impact of the axial core power distribution on power capabilities is not a simple matter, and knowledge of it by itself is not particularly effective in forming a network dispatcher of plant restrictions in advance. The relationship between axial power distribution, power level and core limits is complex. The power distribution changes with turbine load changes. Hence, limitations can materialize during a power change after network load commitments have been made.

It is the principal object of the invention to improve on-line rapid power change capability for a nuclear power generating unit.

The invention resides broadly in a method of controlling a nuclear fueled electric power generating unit including a nuclear reactor having control rods which can be selectively positioned in the reactor core to control the reactivity of the reactor and having a reactor coolant which serves as a heat transfer medium between the reactor core and electric power generating apparatus including a turbine-generator, through power changes completed within a time period over which the xenon level in the reactor does not change appreciably, said method comprising the steps of: measuring the current power level of the reactor and the axial offset; measuring the current control rod position; measuring the reactor coolant temperature; determining the additional amount that the power level can be increased through a change in reactor coolant temperature during said time period; characterized by determining on an on-line, real-time basis from the measured power level, axial offset and rod position, the maximum amount that the power can be increased over the current power level within said time period through repositioning of the control rods; selecting and effectuating a power change for the unit including an increase in power up to a predicted total power increase equal to the total amount that the power can be increased through repositioning of the control rods and through a change in reactor coolant temperature; and operating said unit to change power level from said current power level by said selected change in power.

According to the present invention, the rapid power change capabilities of a nuclear fueled, electric power generating unit are generated on a real-time, on-line basis for use in controlling the unit alone or in a network dispatch system. In addition to analyzing the constraints imposed on short term power changes by the core physics of the nuclear plant, the invention also takes into account any balance of plant limitations and operator ordered constraints.

Conventionally, the nuclear plant is designed to accept step power changes of preselected magnitudes, for instance a step power increase of 10% and a step decrease equal to the lesser of the load rejection capability of the plant or the difference between the current power level and the minimum designed power level. However, depending upon the current state of the core physics, the plant is very often capable of making larger rapid power changes or controlled intermediate changes by ramping the power from the current level to the desired level at a selected rate. A typical ramp rate for a PWR, for instance is 5% per minute. For purposes of this discussion, rapid power changes will include step changes and ramp changes

3

0 097 488

which are in this general range. Such ramp rates are available in a PWR through rod control and through a decrease in reactor coolant temperature. In the preferred embodiment of the invention, the rapid ramp decrease in power capability is equal to the current power level minus the larger of the minimum permitted operating level of the reactor or the lower limit of automatic reactor control, for instance, the 15% power level.

The above power change capabilities are all rather easily calculated. The most difficult power change capability to determine is the ramp increase. As previously mentioned, this is so because the ability to increase power rapidly is dependent not only on the current power level but also on the amount of xenon present and its axial distribution in the reactor core.

Broadly speaking, the rapid power increase capability is determined by measuring on an on-line, real-time basis the current power level, control rod position and reactor coolant temperature and, from these measured values, determining the maximum amount that the power can be increased over the current power level through repositioning of the control rods and through a change in reactor coolant temperature. More specifically, the additional power available through rod movement is determined by using the power level measurements to also determine the axial distribution of the power as represented by the axial offset, and generating a representation of the axial offset response characteristics of the reactor as a function of power and rod position from the current measurad values of rod position, axial offset and power level. A limit is then set for the axial offset. Initially, the maximum axial offset at which full power can be achieved for the current core cycle burnup conditions is selected. Next, it is presumed that the control rods are withdrawn a predetermined amount. For the initial iteration, full rod withdrawal is presumed. From the presumed control rod withdrawal, a predicted power increase is determined. Using the predicted power increase and the presumed rod withdrawal, a predicted axial offset is determined from the previously generated axial offset response characteristic. This predicted axial offset is then compared with the selected maximum axial offset and, if it is equal to or less than the selected limit, the predicted power increase is used as the power increase available on the control rods. If, however, the predicted axial offset exceeds the selected limit for the axial offset, the presumed rod withdrawal is reduced incrementally, and the process is repeated. Several iterations may be needed to bring the power increase available down to a level which will not exceed the axial offset limit.

The axial offset response characteristics for the current state of core physics are generated by storing a plurality of families of curves, each representing the axial offset characteristics as a function of control rod position and power level for a selected reactor xenon distribution. The families of curves are divided into groups associated with the state of core cycle burnup. For instance, in the preferred embodiment of the invention, three groups associated with the beginning, middle and end of the core burnup cycle were selected. After selecting the group of families of curves corresponding to the current state of core cycle burnup, the family of curves which most closely expresses the relationship between the current measured values of rod position, axial offset and power level is selected. This is accomplished by selecting from each family of curves in the selected group the curve corresponding to the current power level and determining from each such curve an expected value of axial offset at the current measured value of rod position. The family of curves associated with the selected axial offset curve which minimizes the difference between the expected axial offset and the measured axial offset is then selected as representative of the current state of the core physics. The difference between the expected and measured values of axial offset is applied to this family of curves as a bias to adjust the curves to actual conditions. The predicted axial offset is then determined from this adjusted family of curves using the predicted power level and the selected rod position.

The predicted power increase is determined by converting the presumed change in rod position, which is equal to the difference between the selected rod position and current rod position, to a predicted reactivity change and then determining the increased power level as a function of the reactivity change. This is accomplished by storing integral rod worth and power defect curves for the several core cycle burnup states, and selecting from the former the percent change in reactivity which would be effected by the change in rod position and using the latter to convert this percent change in reactivity into the predicted power increase.

As previously discussed, increased loads placed on a PWR unit tend to lower the reactor coolant temperature which results in an increase in reactor reactivity to meet the new demand. The constraints on additional power available through a reduction in reactor coolant temperature are the limits which define the acceptable operating region for reactor temperature. The limits which are of most interest in determining the power increase available include the turbine throttle valve saturation limits and core safety and/or steam moisture carryover considerations. The power available is determined by generating a function defining the change in power as a function of reactor coolant temperature, selecting limits for the temperature, and determining the maximum value for the temperature-related power change function as permitted by the limits. Since it is assumed that the control rods will be withdrawn to the fullest extent possible and since their effect is essentially immediate, the initial conditions for determining the power available through a drop in reactor coolant temperature are the predicted power level and reactor coolant temperature expected from the repositioning of the control rods. The expected temperature drop is selected as the larger of (1) the difference between the programmed temperature and the measured reactor coolant temperature, and (2) a preselected typical reactor coolant temperature deviation from the programmed level during a rapid power increase on control rods. A typical value for this temperature deviation is −2.2°C (−4° Fahrenheit). The function defining the change in power as a function of reactor coolant temperature has a slope equal to the reactor power coefficient divided by the average reactor moderator temperature coefficient. The limits are defined as linear functions of reactor coolant temperature and power and are solved simultaneously with the function defining the change in power as a function of reactor coolant temperature to determine the maximum power change permitted by the limits.

Once the total change in power available on the control rods and through a drop in reactor coolant temperature has been determined, the axial offset limit is adjusted to a value associated with the predicted total power level and all of the remaining calculations are repeated to generate a refined solution for the available power.

Finally, the power available through a step increase is reduced to that available through a ramp increase if the latter is less than the preselected stop increase. This limitation on the step increase in power would occur, for instance, where a power increase was in progress or full power output was being approached and the full step increase was no longer available.

All of the step and ramp changes in power, both increases and decreases, are further limited by the balance of plant protection system, and operator-inserted limits if the latter are more restrictive. Balance of plant limits are associated with the temporary loss of key components and systems. Protection system limits are generally defined as the margins to departure from nucleate boiling or kilowatt per foot set points. Operator limits are defined as restrictions on the magnitude in the change of power or on the final power level.

The rapid power change capabilities of the nuclear unit are used by the network dispatch system along with the capabilities of other units in the load network in determining the load to be allocated to each unit. Actual changes in power in the nuclear unit are effected by positioning the throttle valve in accordance with power change signals generated by the dispatch system. The rod control system thus repositions the control rods to accommodate for the demanded power change. Since the power change signal from the dispatcher is limited by the power available on the rods and through a drop in reactor coolant temperature, maximum utilization of the rapidly available power can be made without exceeding the nuclear unit's capabilities.

The present invention encompasses the method for controlling a nuclear fueled power generating unit.

Figure 1 is a schematic diagram of a nuclear fueled electric power generating unit and network dispatch system integrated in accordance with the teachings of the invention:

Figures 2a, 2b, 2c and 2d comprise a logic flow diagram for determining, in accordance with the teachings of the invention, the approximate current axial xenon distribution in the reactor represented in Figure 1;

Figures 3a, 3b and 3c comprise a logic flow diagram for determining in accordance with the teachings of the invention the power available on the reactor control rods alone;

Figure 4 is a graphical representation of typical limits on the axial offset in a PWR and of some of the techniques of the present invention;

Figure 5 is a graphical representation of a typical temperature operating region for a PWR and of other techniques according to the invention;

Figure 6 is a logic flow diagram for determining in accordance with the teachings of the invention the initial conditions for calculating the power increase available through a drop in reactor coolant temperature;

Figure 7 is a logic flow diagram for setting up the relationships necessary to define the reduced temperature transient trajectory in accordance with the teachings of the invention; and

Figures 8a and 8b comprise a logic flow diagram for determining the maximum power increase available on temperature drop, the 5% per minute power increase available, and the step power increase available.

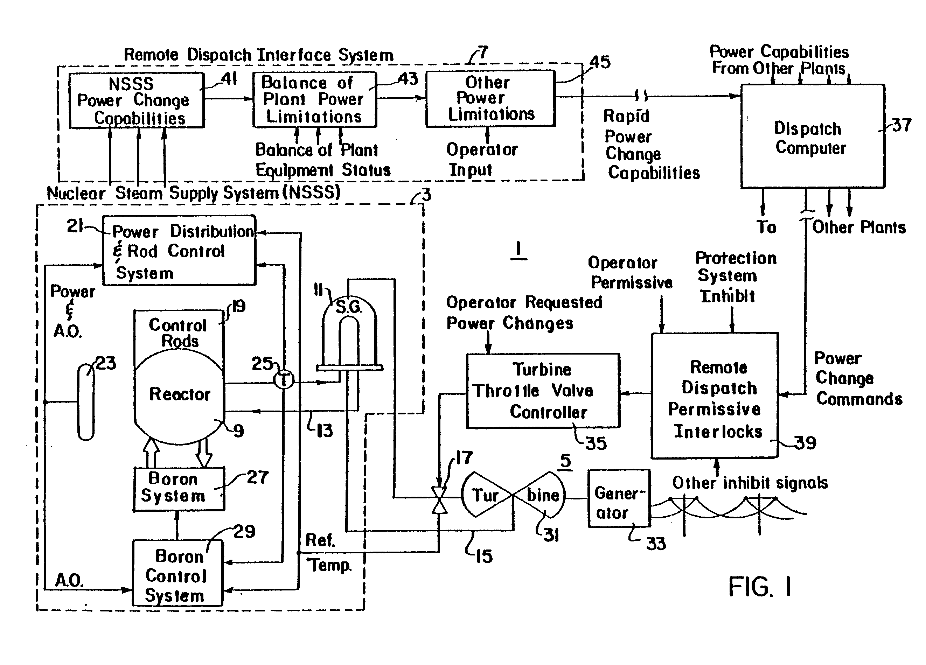

Figure 1 illustrates schematically a nuclear fueled pressurized water reactor (PWR) electric power generation unit 1 integrated in accordance with the teachings of the invention into an automatic dispatch system. The power generating unit 1 includes a nuclear steam supply system (NSSS) 3, a turbine-generator combination 5, and a remote dispatch interface system 7.

The NSSS 3 includes a nuclear reactor 9 which generates heat which is transferred to a steam generator 11 by a reactor coolant (water) in a primary loop 13. The steam generator 11 supplies steam to the turbine-generator combination 5 through a secondary loop 15 which includes the turbine throttle valve 17.

The reactor 9 is provided with control rods (shown collectively as 19) which, as mentioned above, are inserted in and retracted from the reactor core to regulate reactor reactivity and to control the vertical distribution of power in the reactor (axial offset). Rod position is controlled by the power distribution and rod control system 21 which monitors the power level in the reactor as measured by flux detector 23, the reactor coolant temperature as measured by the temperature detector 25, and a reference temperature supplied by the turbine throttle valve 17. The flux detector 23 measures the neutron flux level, which is indicative of the power level, in the upper and lower halves of the reactor 9. The sum of the two readings is the total power level of the reactor and the difference is used to determine the axial offset in the well-known manner. The temperature detector 25 provides the average coolant temperature for either the hot or cold

**0 097 488**

leg of the primary circuit 13. The reference temperature supplied by the turbine throttle valve is representative of the power demand placed on the NSSS by the turbine-generator.

The reactivity of reactor 9 is also controlled by a boron system 27 which dissolves boron, a neutron absorber, in the reactor coolant in controlled amounts. A boron control system 29 regulates the level of boron in the reactor coolant as a function of the axial offset as measured by the flux detector 23, the reactor coolant temperature as detected by temperature detector 25, and the power demand as indicated by the reference temperature supplied by the turbine throttle valve 17.

While, as mentioned above, the control rods 19 and boron system 27 control the reactivity of the reactor 9, in practice they are used in a passive mode to maintain operation of the reactor within design parameters rather than for initiating power changes in the NSSS/turbine-generator combination. This is possible because the PWR exhibits a negative moderator temperature coefficient. As more thermal demand is placed on the reactor, the reduction in reactor coolant temperature increases its moderating effect and thereby increases reactor reactivity. The reactivity increases to meet the demand within design and control limits.

Thus, an increase in PWR power output is effected by opening the turbine throttle valve 17. This results in more energy input to the turbine 31 and more output from the generator 33. The initial increase in energy is provided by the stored energy of the steam in the secondary loop 15. However, this increases the demand for thermal energy by the steam generator 11 which results in a reduction in reactor coolant temperature. The lowered reactor coolant temperature results in an increase in reactivity to the level needed to meet the demand. The control rods 19 and boron system 27 are then used to adjust the reactor temperature to a programmed level. In order to improve system response, the reference temperature, representative of the power demand, is fed forward from the throttle valve 17 to the rod control system 21 and boron control system 29. As mentioned above, the boron system is slow to react and it therefore has a negligible short-term effect on reactor temperature. The rod control system, however, has an immediate effect on reactivity and, therefore, reactor temperature. If the increase in power demand is more than can be met by the rod control system, that is, withdrawing the rods as far as possible within prescribed restraints such as axial offset does not provide sufficient increased reactivity to bring the reactor temperature to the programmed level, the increased reactivity can be provided by the reduced reactor coolant temperature until the boron system has had time to respond.

The turbine throttle valve 17 is controlled by the turbine throttle valve controller 35 in a conventional manner. Desired changes in power can be supplied to the controller 35 locally through manual inputs by the operator, as indicated in Figure 1, or remotely by a dispatch computer 37 through remote dispatch permissive interlocks 39. The remote power change commands can be generated manually as an alternative to, or as an addition to, those generated by the dispatch computer. The permissive interlocks 39 include the operator permissive interlock which allows the operator to take over exclusive control of power changes, protection system inhibits which assure that power changes commanded do not exceed NSSS capabilities, and other inhibit signals which assure that other plant limits are not exceeded.

The remote dispatch interface system (RDIS) 7, which is represented functionally in Figure 1, takes measured NSSS data, balance of plant (BOP) data and operator inserted power change limits, and calculates the rapid power change capabilities of the plant. This is the major piece of dynamic (i.e., on-line) information needed to integrate the nuclear unit into the economic remote dispatch algorithms of the power network. The RDIS calculations are concerned with the rapid power change capabilities because they are the most limiting from a plant control point of view. Generally, larger power changes will be available at slower rates since the operator can take advantage of the boron control system.

The NSSS rapid power change capabilities are determined, as indicated in block 41 in Figure 1, from measured plant conditions and correlations of core physics parameters. These calculations must factor in both power (reactivity) and axial power distribution limits. The measured conditions are power, axial offset, rod position and reactor coolant temperature.

Generally speaking, the balance of plant is capable of handling any power change within the range of 15% to 100% power if all systems and components are functioning. If any of these are temporarily inoperable, the power change capabilities of the NSSS may have to be restricted. Any balance of plant limitations on NSSS capabilities are determined as indicated by block 43 of Figure 1 by monitoring the status of key components and systems (feedwater pumps, condensate pumps, recirculating water pumps, feedwater heaters, steam reheater valves, etc.) and factoring in the effects of their inoperability. More simply, the operator can evaluate the effects of out-of-service components (using standard techniques) and then insert any limitations in the plant power capabilities calculations.

As indicated by block 45 in Figure 1, provisions are also made for the operator to insert limits on the magnitude of power changes and on the absolute minimum and maximum power limits. These are needed to account for any temporary restrictions on plant output (PCI limits, rod bow penalty, N−1 loop operation, etc.). These limits subtract from the NSSS power change calculations.

The rapid power change capability of the PWR as calculated by the RDIS 7 can be used by the operator in making power changes, but preferably it is applied to the network dispatch computer 37 along with similar data from the other plants in the network. The RDIS can be implemented at the location of the plant, with the power change capabilities being transmitted over remote lines, or it can be implemented at the remote dispatch computer 37, with plant input data being transmitted over remote lines.

6

**0 097 488**

The dispatch computer also has available the incremental unit power costs of each plant in the network. The incremental power costs weigh heavily in the dispatcher loading allocation decisions. Generally, the most power will be produced from the cheapest sources. There are frequent exceptions to this rule, however. For example, transmission losses or the need to maintain an inefficient unit operating at a minimum load for spinning reserve duty may override the economy of producing power at a given plant. Any power generation limitation of a unit on a network generally influences the loading of all units on the network. If, for example, a plant temporarily loses its ability to supply further power increases, the dispatch computer will reevaluate the incremental unit power costs, transmission losses, and other economic factors and redistribute (if necessary) the present and future power generation requirements of all operating units on the network to minimize costs.

The dispatch computer 37 utilizes the power change capability applicable to each plant, network load demand, current load allocations, and stored economic data to generate power change commands which are applied to the turbine throttle valve controller 35 through the remote dispatch permissive interlocks 39. An example of a suitable economic dispatch system is disclosed in commonly owned U.S. Patent No. 3,932,735 which is incorporated herein by reference to illustrate a complete system. In the patented dispatch system, on-line indications of the rapid power change capability are not supplied to the computer. Instead, preselected power generation restrictions are utilized. The power generation restrictions of fossil (and other) units are generally known in advance or are easily determined from the current output level and basic performance data. Hence, these plants are readily factored into the economic manipulation of a network. The same is not true for nuclear power plants.

The RDIS of the present invention provides the on-line rapid power change capabilities of a PWR unit to the dispatch computer 37 for use in the economic dispatching scheme. The RDIS 7 of Figure 1 generates representations of the following rapid power change capabilities:

    1)  ramp decrease;
    2)  step decrease;
    3)  ramp increase;
    4)  step increase.

Considering that the dispatch computer cycle time for load allocation is one to four minutes, the ramp rates under consideration for rapid power change calculations are those which affect a significant power change in this time frame. A typical rapid ramp rate for a PWR is a 5% change in power per minute and this rate will be used in the illustrations although it is to be understood that this particular rate is not critical to the operation of the present invention.

The functions performed by the RDIS are best carried out by a digital computer such as the plant general purpose computer or the network dispatch computer. The manner in which each of the four categories of rapid power change capabilities is determined will be described separately.

5% Minute power decrease

Generally speaking, 5%/min. power decreases of any magnitude are within the capabilities of the rod control system and are within the bounds, which expands as power decreases, of current axial power distribution control strategies (e.g. constant axial offset control). The ramp decrease capability ($P_{DN}$) of the plant, taking into consideration any balance of plant or operator inserted limits, is:

$$P_{DN} = \text{minimum of } [(P_{TU} - L), \Delta PLO, \text{BOP Limits}] \qquad (1)$$

where:
  $P_{TU}$  =current measured turbine load (output);
  L     =maximum of [.15, PLO];
  .15   =15% lower limit of automatic operator control;
  PLO  =operator inserted lower power limit;
  $\Delta PLO$ =operator inserted power change limit.

Step power decrease

Step decreases in power ($P_{SD}$) up to the design load rejection capacity ($P_{LR}$, e.g. 50% or 90%) are available. Hence:

$$P_{SD} = \text{minimum of } [\Delta PLO, (P_{TU} - PLO), P_{LR}, \text{BOP Limits}] \qquad (2)$$

5% Minute power increase

The power increase available at 5%/min. ($P_{UP}$) is the sum of the power available on control rods ($P_R$) and that available through a reduction in reactor coolant temperature ($P_T$), less any protection system limits operator inserted or BOP restrictions. Therefore:

$$P_{UP} = \text{minimum of } [(P_R + P_T), \text{protection system limits, operator inserted limits, BOP limitations}]$$
$$(3)$$

A.  Power available on control rods

The basic concept behind the determination of the power available on control rods is to determine how much rod withdrawal is available within the constraints of the axial power distribution. This amount of withdrawal plus the rod worth characteristics will yield the amount of reactivity that can be supplied by the control rods. The power coefficient can then be used to convert this reactivity to a power change.

The one difficulty with the above procedure is that the relationship between rod withdrawal and axial power distribution limits is not single valued. It depends on the axial xenon distribution in the core at the time. Unfortunately, axial xenon distribution is not directly measurable. A calculation of the xenon distribution would involve an analysis of the core in light of the time/power history for the preceding two or three days.

To overcome this lack of measured xenon data and calculational sophistication, a series of correlations have been developed that will allow an indirect determination of the xenon distribution that exists in the core and will provide an accurate relationship between rod withdrawal and axial power distribution. The use of these correlations is subdivided into three steps. In the first, the approximate existing xenon distribution ($\Delta Xe$) is determined by comparing the measured rod position ($R_p$) and axial offset (A.O.) with those possible under various preselected $\Delta Xe$'s. This will give the power/axial offset/rod position/$\Delta Xe$ correlation that most closely matches current operating conditions. The second step adjusts this correlation to more closely match the current operating parameters. In the final (third) step, the adjusted correlation is used (through an iterative scheme) to determine the amount of rod travel possible within axial offset limits. This information is then used (as described above) to determine the power available on rods alone.

The procedure to calculate the power available on control rods alone can be outlined as follows:
1. Determine the Approximate Axial Xenon Distribution
2. Adjust A.O. and $R_p$ Data to Closely Reflect the Xenon Distribution
3. Calculate Power Distribution Limits
4. Calculate Power Available ($P_R$) on Maximum Allowed Rod Travel.

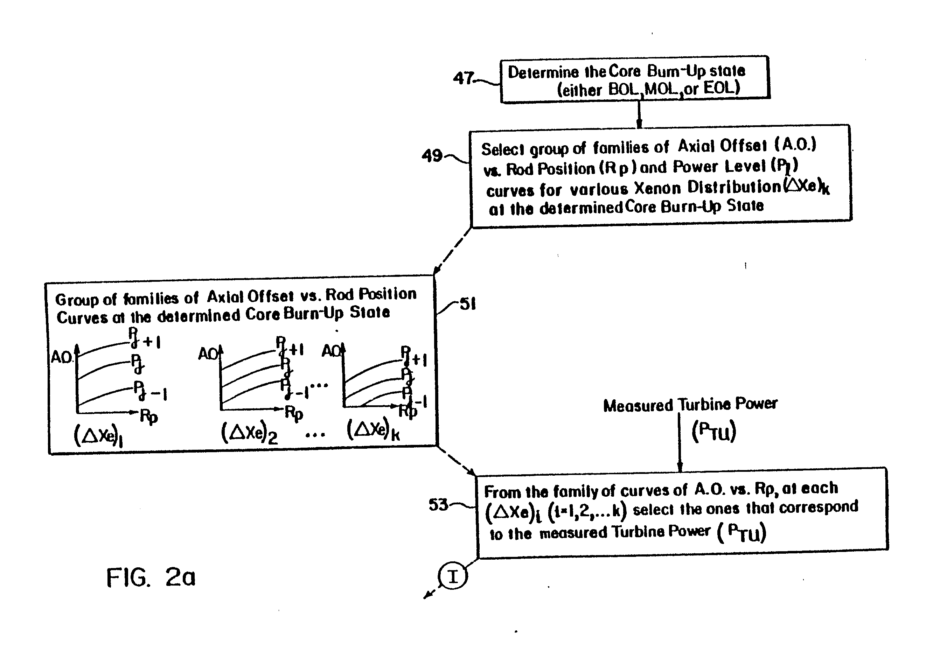

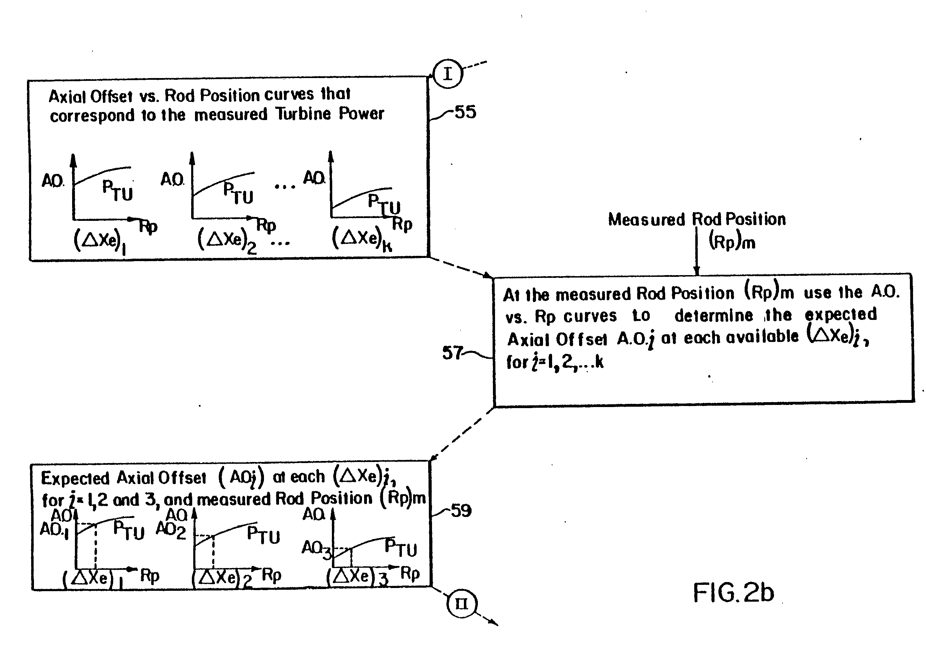

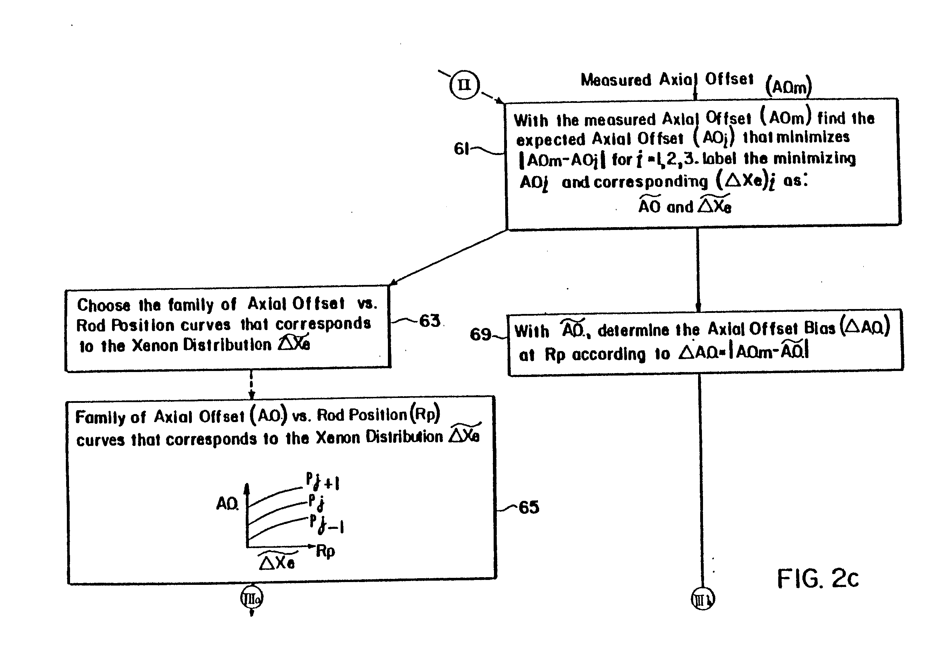

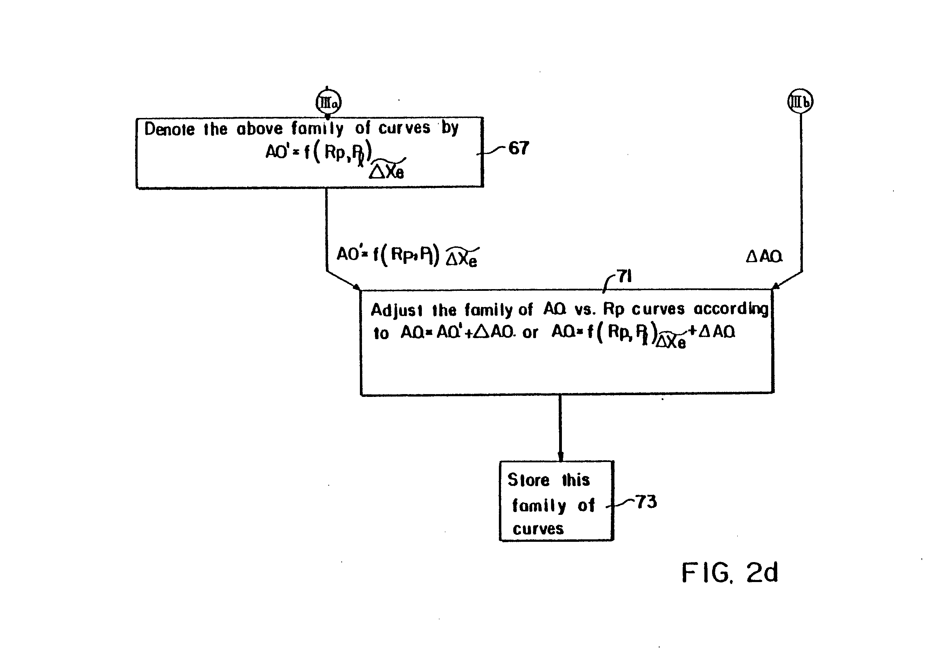

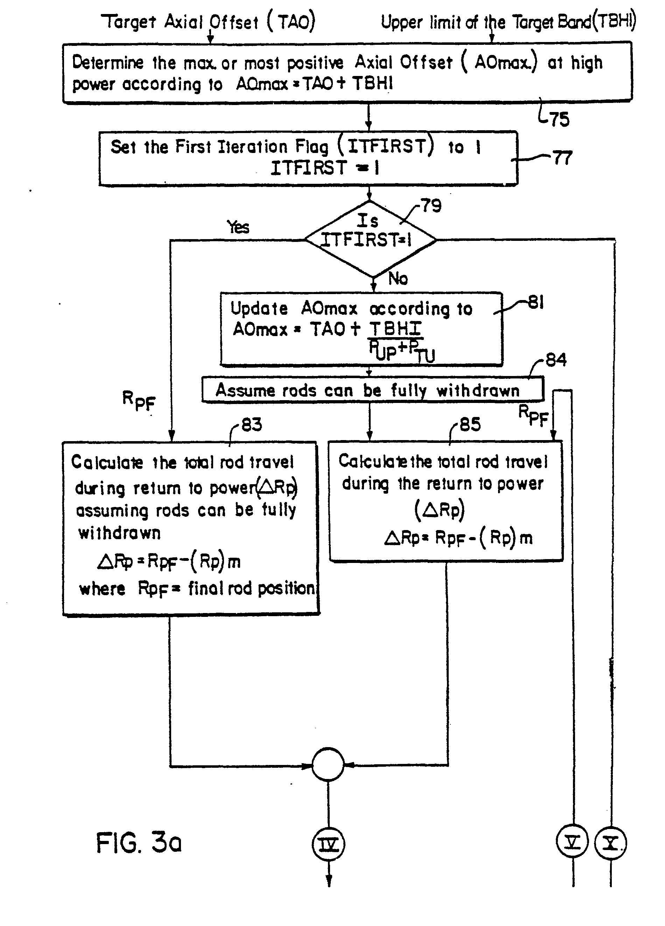

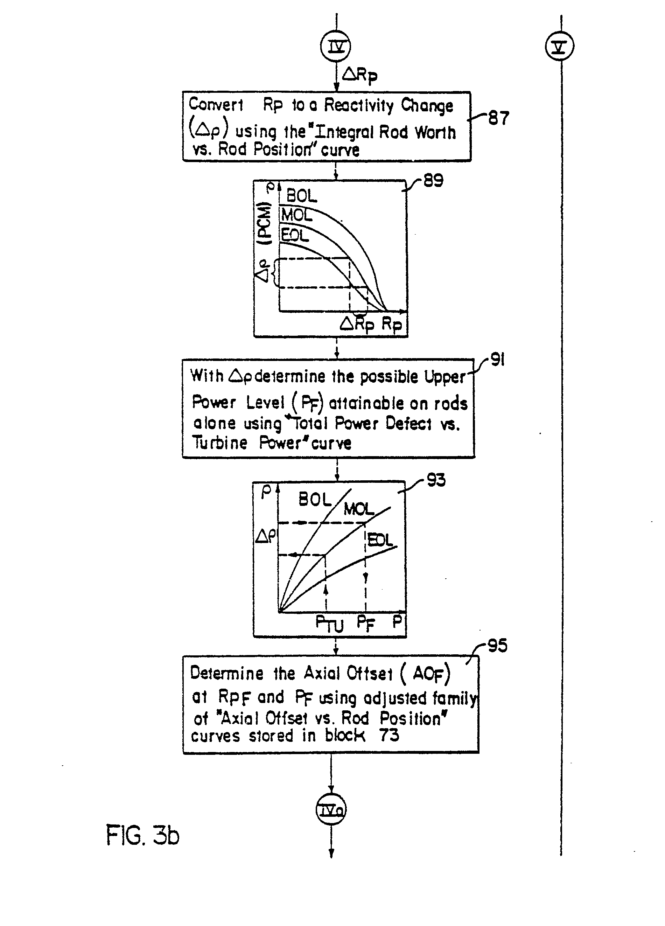

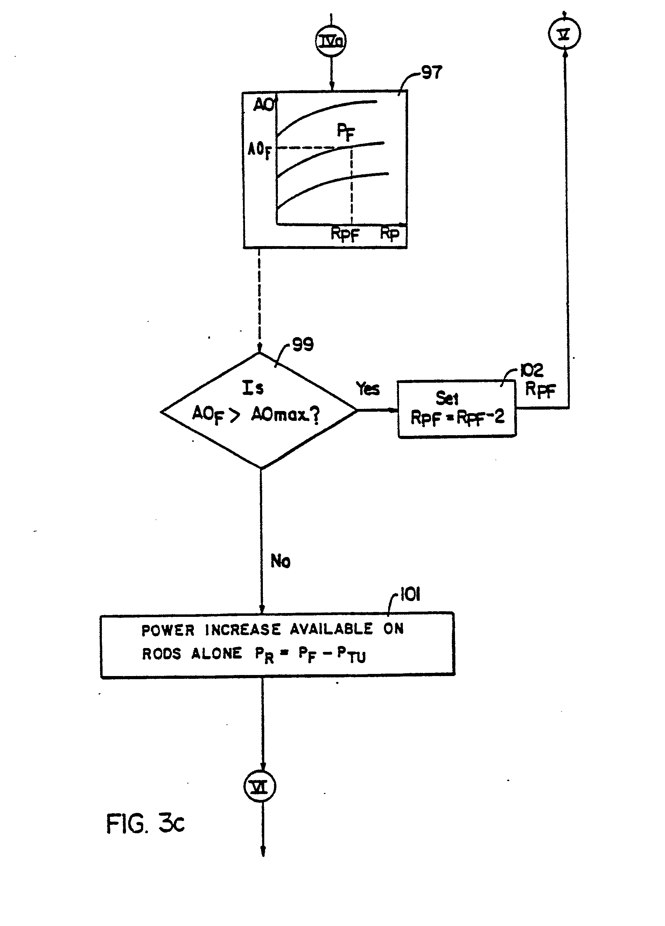

The logic flow of this procedure is illustrated in Figures 2 and 3 and the details of each step follow. The circled Roman numerals in these logic flow diagrams and the others indicate the flow between the separate figures.

1. Determine the approximate axial xenon distribution

Correlations or families of curves of rod position ($R_p$), axial offset (A.O.) and power (P) for various xenon distributions ($\Delta Xe$) and at selected stages of core burnup (typically beginning, BOL; middle, MOL; and end, EOL of core life) are stored. These correlations are available as analytical expressions (generally a polynomial of 4th or lower order) or as table lookups with interpolation routines.

As shown in block 47 in the flow diagram of Figure 2a, the appropriate state of core burnup is determined first. The group of families of curves at various xenon levels for the determined core burnup state is then selected as indicated in block 49. Block 51 illustrates such a group wherein each family of curves corresponds to a selected xenon distribution ($\Delta Xe)_k$ at the determined core burnup state. Next, as directed in block 53, and as illustrated in block 55 of Figure 2b, the curve corresponding to the measured turbine power ($P_{TU}$) is selected from each family of curves at each xenon level ($\Delta Xe$) represented in block 51. Using the measured control rod position ($R_p)_m$ and the rod position versus axial offset curves for the measured turbine power level shown in block 55, the expected axial offset, $AO_l$, is determined in block 57 for each xenon level available (generally three such levels are satisfactory). Block 59 illustrates graphically the manner in which such a determination is made. Each of the expected values of axial offset is then compared with the measured axial offset in block 61 of Figure 2c to determine the expected axial offset closest to the measured value. This expected axial offset is associated with the correlation that most closely represents the actual xenon distribution in the core and is labeled $\widetilde{AO}$. The corresponding xenon level is labeled $\widetilde{\Delta Xe}$. The family of axial offset versus rod position curves corresponding to the xenon distribution $\widetilde{\Delta Xe}$ is selected as indicated in block 63. This family of curves, which is illustrated in block 65, is defined by the relationship set forth in block 67 of Figure 2d.

2. Adjust AO and $R_p$ data to closely reflect the xenon distribution

A bias, which is calculated in block 69 of Figure 2c as the difference between the measured axial offset, $AO_m$, and the closest expected axial offset, $\widetilde{AO}$, at the measured rod position, is applied in block 71 of Figure 2d to the equation set forth in block 67. This has the effect of shifting the family of curves illustrated in block 65 vertically to more closely align the correlation with the actual xenon distribution. This adjusted family of curves is then stored in block 73.

3. Calculate power distribution limits

Figures 3a, 3b and 3c illustrate the logic flow for calculating the power distribution limits. Initially, a determination is made in block 75 of Figure 3a of the most positive axial offset at which 100% power is permissible. As previously discussed, restrictions placed on axial offset dictate that the power level attainable by the reactor decreases the more the axial offset deviates from a desired or target value. In fact, full power is only attainable within a relatively narrow band around the target axial offset. While the target axial offset is located near the vertical midpoint of the reactor core, its exact location varies as a function of the core cycle burnup state.

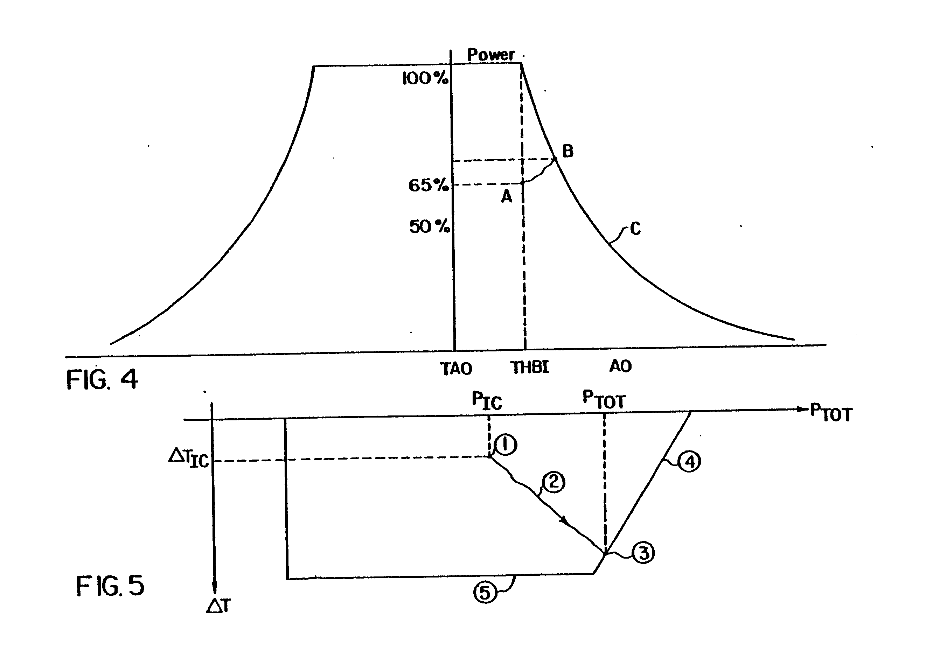

Figure 4 illustrates graphically the limitations on power as a function of axial offset with axial offset plotted on the abscissa and power on the ordinate. Since increases in power through withdrawal of the rods in the upward direction tend to cause the axial offset to increase in the positive direction, the limit on positive axial offset is of most interest here. As can be seen from Figure 4, 100% power is attainable with an axial offset more positive than the target axial offset up to the upper limit of the target band, THBI. Thus, as determined in block 75 of Figure 3a, the maximum axial offset, $AO_{max}$, at which full power is permissible, is equal to the sum of the target axial offset, TAO, and the target band upper limit, TBHI.

The value of $AO_{max}$ calculated in block 75 assumes that the calculated power increase capability will allow full power to be reached. Of course, this need not be the case. Using $AO_{max}$ for full power will generate conservative results, that is, the actual upper power level that could be reached will be larger than the one calculated. This can be understood by reference to Figure 4 again. Assuming that it is determined, as indicated by the point A, that the calculations which follow determine that an increase to only 65% power can be attained by maintaining the axial offset within the limits for 100% power, it is obvious that by withdrawing the rods further the power will go up to, for instance, the point B, but the axial offset will also increase. This is acceptable, however, as long as the axial offset remains within the prescribed limits defined by the curve C. The conservatism thus introduced by using the axial offset limit for 100% power can be maintained in the calculations to cover contingencies or it can be iterated out.

If the more realistic calculation of the increased power available is desired, an iteration flag, ITFIRST, is set equal to ONE in block 77 of figure 3a. Thus, on the first iteration, ITFIRST will still be equal to ONE when tested in block 79 and the calculation of the power available on the control rods and through a reduction in reactor coolant temperature, $P_{UP}$, proceeds in a manner discussed below. After the value of $P_{UP}$ has been determined, ITFIRST will be equal to ZERO so that when the program loops back to block 79, as indicated through the connection X and ITFIRST is again interrogated, the program will branch to block 81 where· $AO_{max}$ is updated in accordance with the equation shown which defines the axial offset limit, curve C shown in Figure 4. Thus, the allowable axial offset is modified to reflect the permissible value for the axial offset at the predicted power level.

4. Calculate power available ($P_R$) on maximum allowed rod travel

On the first iteration, the total rod travel $\Delta R_p$ is determined in block 83 of Figure 3a as the difference between the measured rod position and the final rod position, assuming that the rods can be fully withdrawn. On the second and subsequent iterations, the rods are at first also assumed to be fully withdrawn as indicated in block 84 before the total rod travel is determined in block 85. As will be seen below, final rod position may then be incrementally reduced from the fully withdrawn position for subsequent calculations of $R_p$ in block 85.

The change in rod position, $R_p$, is converted to a reactivity change $\Delta\rho$, in block 87 of Figure 3b using an integral rod worth versus rod position curve. A set of these curves is shown in block 89 for three core cycle burnup stages labeled BOL, MOL and EOL. As shown by the example using the midlife curve, a change in rod position $R_p$ produces a change $\Delta\rho$ in integral rod worth as measured in percent mille (pcm) change in reactivity.

The change in reactivity, $\Delta\rho$, is used in block 91 to determine the predicted upper power level, $P_F$, that could be reached based upon the presumed rod withdrawal alone. This is accomplished using a set of power defect versus turbine power curves such as those shown in block 93. Knowing the current power level, $P_{TU}$, the corresponding value of $\rho$ can be determined using the curve associated with the appropriate core cycle burnup state, such as MOL. By adding $\Delta\rho$ to this value of $\rho$, the predicted final power level $P_F$ can be determined.

Next, the predicted axial offset, $AO_F$, for the predicted power level $P_F$ is determined in block 95 using the predicted final rod position, $R_{PF}$ and the adjusted family of rod position versus axial offset curves stored by block 73. This step is illustrated graphically to block 97 of Figure 3c. If the predicted axial offset, $AO_F$, is less than or equal to the maximum allowable axial offset, $AO_{max}$, as determined in block 99, then $P_F$ is the final power level that can be reached on rods alone and the change in power effected thereby is equal to $P_F$ minus the current power level $P_{TU}$ as shown in block 101. If, however, $AO_F$ exceeds $AO_{max}$, a new assumption of rod withdrawal is made in block 102 by reducing $R_{PF}$ by two steps and a new calculation of the predicted power and predicted axial offset is made by looping back to block 85 in Figure 3a. Several iterations may be needed to determine the maximum power level attainable on control rods alone within axial power distribution limitations.

B. Power available through a reduction in reactor coolant temperature

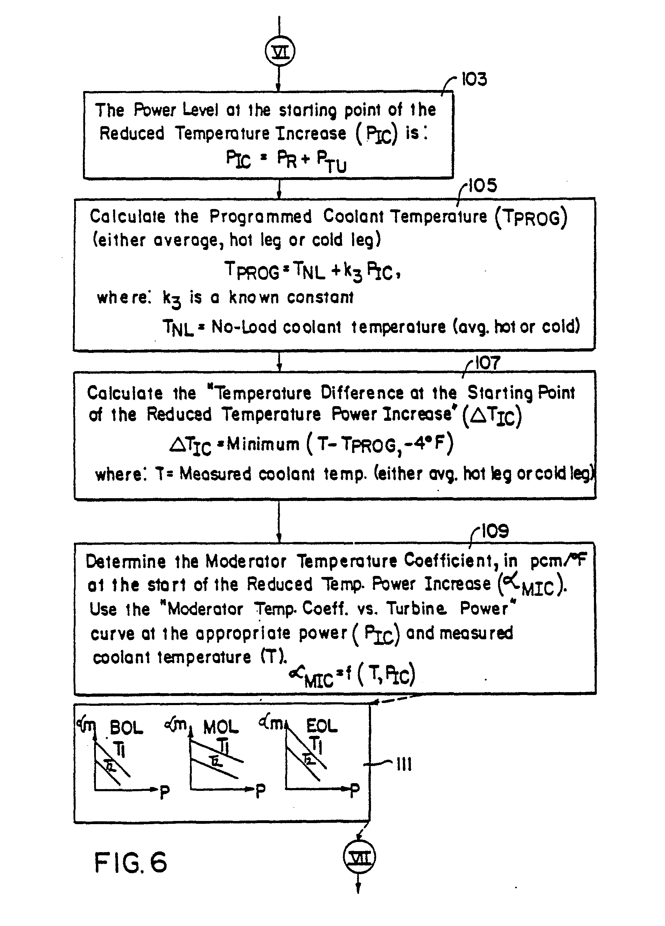

The power available through a reduction in reactor coolant temperature is limited by constraints imposed by the turbine-generator, the steam generator, and reactor control and safety limits. The permitted reduced temperature operating region is illustrated graphically in Figure 5. The initial condition for the power available through a reduction in coolant temperature is the predicted power attainable on control rods alone, for instance, the point 1 in Figure 5. The increase in power available on a temperature drop is represented by a trajectory 2 across Figure 5. This trajectory is a function of moderator and power coefficients. The transient ends when the trajectory reaches any of the boundaries of the operating region, for instance, the point 3. This intersection determines the total power, $P_{TOT}$, available on rods and temperature drop.

1. Starting point of trajectory

The flow logic for determining the initial conditions for the reduced temperature trajectory is shown in Figure 6. The power level $P_{IC}$, at the starting point of the reduced temperature increase is calculated in block 103 as the sum of the current power level and the predicted power increase available in the control rods. The initial temperature conditions are determined by first calculating the programmed coolant temperature at the initial power level. The programmed temperature is a linear function of the power level as indicated in the equation set forth in block 105. Next, the temperature difference, $\Delta T_{IC}$, at the starting point of the reduced power increase is determined in block 107 as the minimum (most negative) of: the difference between the measured coolant temperature and the programmed coolant temperature, and a typical temperature deviation from the programmed value during a rapid power increase on control rods which is assumed to precede the power increase on temperature. A typical value for this expected temperature drop is $-4°$ Fahrenheit ($-2.2°$C). As a final step in determining the initial conditions for the reduced temperature power increase, the moderator temperature coefficient at the start of the transient, $\alpha_{MIC}$, is determined in block 109 in pcm/°F. using the moderator temperature coefficient versus turbine power curves shown in block 111 at the appropriate power, $P_{IC}$, and measured coolant temperature, T, for the existing core cycle burnup state.

2. Reduced temperature transient trajectory

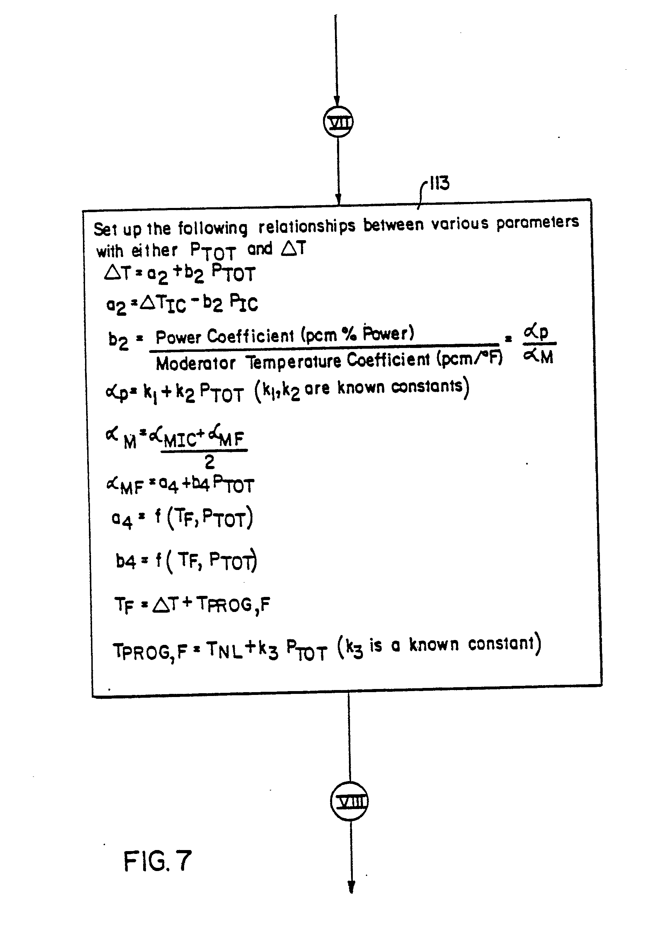

A determination of the trajectory during a reduced temperature power increase requires setting up a number of relationships as shown in block 113 of Figure 7. The equation for the trajectory beginning at the starting point determined by the calculations in blocks 103 and 107 of Figure 6 is:

$$\Delta T = a_2 + b_2\, P_{TOT} \tag{4}$$

where $\Delta T$ is the deviation from the programmed temperature and $P_{TOT}$ is the total power including current power plus that available from rod control and from the reduced temperature trajectory. The constant $a_2$ defines the intersection of the trajectory with the ordinate axis and $b_2$ represents the slope of this function. As can be seen from block 113, the slope, $b_2$, is equal to the reactor power coefficient, $\alpha_p$, divided by the moderator temperature coefficient, $\alpha_m$. The power coefficient, $\alpha_p$, is the slope of the appropriate power defect versus turbine power curve illustrated in block 93. Since this curve is defined by a quadratic equation, the slope, $\alpha_p$, is a linear function of the total power $P_{TOT}$.

The moderator temperature coefficient is a linear function of power for a given temperature as shown by the curves in block 111. The variable, $\alpha_m$, is the average value of the moderator temperature coefficient at the initial condition (point 1 in Figure 5) and at the final condition (point 3). The moderator temperature coefficient at the initial conditions, $\alpha_{MIC}$, was calculated in block 109. The linear equations defining the curves shown in block 111 are used to calculate the moderator temperature coefficient at the final point, $\alpha_{MF}$, with $a_4$ being the ordinate of the appropriate curve at zero power and $b_4$ being the slope.

The final temperature, $T_F$ (at point 3) is equal to the sum of the programmed final temperature $T_{PROG,F}$ and the temperature deviation $\Delta T$. The programmed final temperature, $T_{PROG,F}$, is a linear function of the power with the no load temperature, $T_{NL}$, and a constant $K_3$ as the initial conditions.

3. Determine power increase available

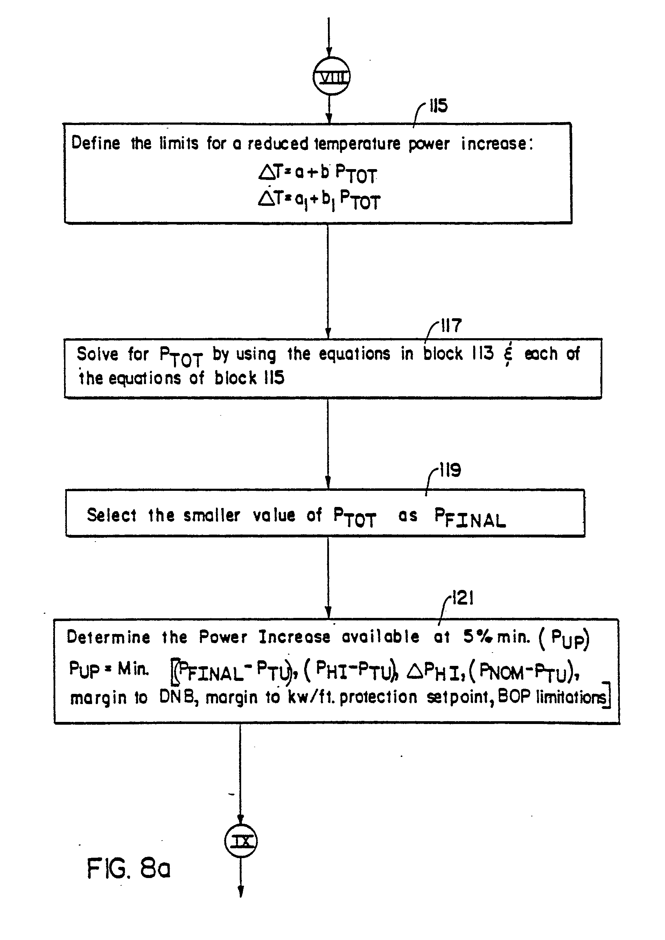

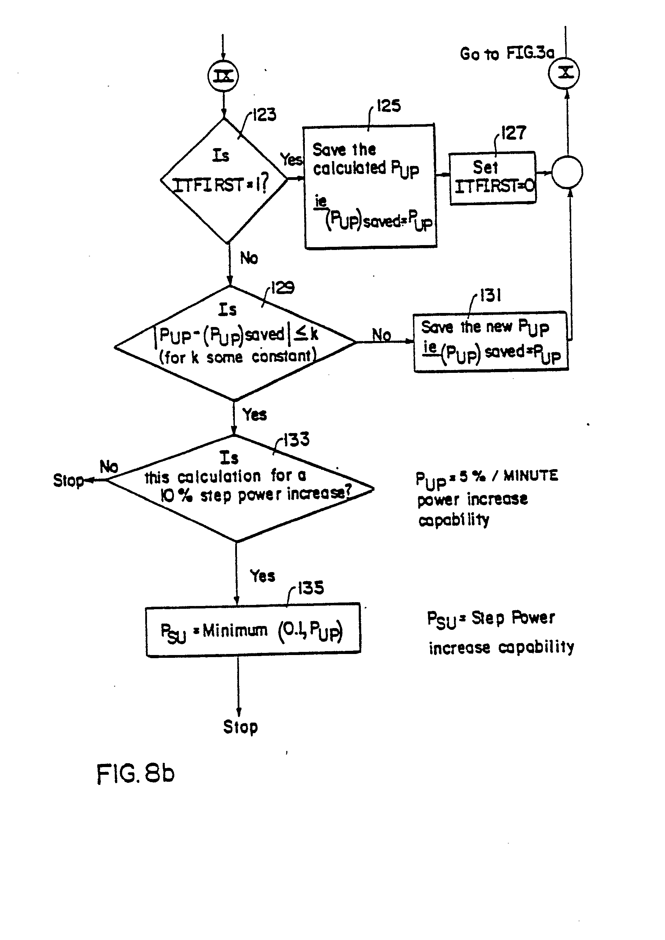

Figures 8a and 8b show the flow logic for determining the power increase available at 5%/minute. As a first step, the limits of the trajectory as defined by the boundaries of the acceptable operating region shown in Figure 5 are determined in block 115. The right boundary 4 is the turbine throttle value saturation characteristic. It is a linear function of the temperature deviation, $\Delta T$, the total power, $P_{TOT}$, and the constants a and b. The lower boundary 5 in Figure 5 is generally set by core safety and/or steam moisture carryover considerations. In general, it is composed of a series of straight line segments which are a linear function of the temperature deviation, $\Delta T$, the total power, $P_{TOT}$, and the constants $a_1$ and $b_1$. The boundary of the left side of the acceptable operating region shown in Figure 5 represents the lower limit of automatic control; however, it is not a factor in determining the power increase on temperature drop.

An examination of Figure 5 shows that the reduced power temperature trajectory 2, if projected far enough, will intersect both of the boundaries 4 and 5; one at the edge of the acceptable operating region and one outside. The initial conditions and slope of the trajectory determine which boundary will be intersected first. In block 117, each of the equations of block 115 is solved simultaneously with the 10 equations of block 113, to determine the intersection of the reduced temperature trajectory with each of the boundaries 4 and 5. Since it can be seen from Figure 5 that the trajectory always intersects the boundary defining the acceptable operating area before intersecting the other boundary, the smaller value of $P_{TOT}$ obtained in block 117 is selected in block 119 as $P_{FINAL}$. $P_{FINAL}$ represents the final power than could be achieved on both the control rods and through the reduced temperature power increase.

Next, the power increase available at 5%/minute, $P_{UP}$, is determined in block 121 as the minimum of:

# 0 097 488

the difference between $P_{FINAL}$ and the current power level, $P_{TU}$, the difference between the highest permitted power level $P_{HI}$ as determined by the operator and the current power level $P_{TU}$, the largest power change $\Delta P_{HI}$ permitted by the operator, the difference between nominal rated full power $P_{NOM}$ and the current power level $P_{TU}$, the margin to departure from nucleate boiling, the margin to the kilowatt per foot protection setpoint, and the balance of plant limitations.

If this was the first attempt at calculating $P_{UP}$, as indicated by ITFIRST being equal to ONE when tested in block 123 of Figure 8b, the calculated value of $P_{UP}$ is stored as $(P_{UP})_{SAVED}$ in block 125, ITFIRST is set to ZERO in block 127, and the program returns to block 79 in Figure 3a as indicated by the tag X. As previously described, a calculation of axial offset will then be made using the axial offset limit associated with the predicted power level to be reached with the power increase, $P_{UP}$. Again the power available on rods alone will be determined by incrementally reducing the assumed rod withdrawal until the predicted axial offset is within limits. This power estimate will then be used as the initial conditions for determining a new value for the power available on a temperature reduction, with the two revised power calculations summed and compared with the other limits to provide a new estimate of $P_{UP}$.

This time when ITFIRST is tested in block 123 it will be equal to ZERO, and a test is then made in block 129 to determine if the new value of $P_{UP}$ has converged to within a preset limit, K, of the last calculated value of $P_{UP}$, i.e. $(P_{UP})_{SAVED}$. If not, the new value of $P_{UP}$ is saved in block 131 and additional iterations are made until the magnitude of the difference between successive calculated values of $P_{UP}$ is equal to or less than K. A typical value for K would be 1%, and about 5 to 6 iterations would typically be required to reach this state of convergence.

When the conditions of block 129 are met, a determination is made in block 133 whether this calculation is for a step increase or not. If not, $P_{UP}$ is the 5% per minute power increase capability.

### Step increase

The PWR units designed by the assignee of the present invention are designed to accept a 10% step increase. However, this increase in power is subject to the same limitations as $P_{UP}$: axial offset limits, temperature limits, maximum power limits, safety limits, operator limits and BOP limits. Therefore, as indicated in block 135 of Figure 8b, the step power increase is determined as the minimum of 0.1 (10%) of $P_{UP}$ which, as shown above, already has taken into consideration the appropriate limits on a power increase.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the invention which is to be given the full breadth of the appended claims and any and all equivalents thereof.

### Claims

1. A method of controlling a nuclear fueled electric power generating unit including a nuclear reactor having control rods which can be selectively positioned in the reactor core to control the reactivity of the reactor and having a reactor coolant which serves as a heat transfer medium between the reactor core and electric power generating apparatus including a turbine-generator, through power changes completed within a time period over which the xenon level in the reactor does not change appreciably, said method comprising the steps of:
   measuring the current power level of the reactor and the axial offset;
   measuring the current control rod position;
   measuring the reactor coolant temperature;
   determining the additional amount that the power level can be increased through a change in reactor coolant temperature during said time period;
   characterized by determining on an on-line, real-time basis from the measured power level, axial offset and rod position, the maximum amount that the power can be increased over the current power level within said time period through repositioning of the control rods;
   selecting and effectuating a power change for the unit including an increase in power up to a predicted total power increase equal to the total amount that the power can be increased through repositioning of the control rods and through a change in reactor coolant temperature; and
   operating said unit to change power level from said current power level by said selected change in power.

2. A method according to claim 1 wherein the step of determining the power increase capability through repositioning the control rods includes the steps of:
   (a) generating a representation of the current axial offset response characteristics of the generating unit as a function of current power level and rod position from the current measured values of rod position, axial offset and power level;
   (b) selecting a limit for the axial offset;
   (c) selecting a predetermined withdrawal of the control rods;

11

(d) determining the predicted power increase available with said preselected withdrawal of said control rods;

(e) determining from said axial offset response characteristic the predicted axial offset which would be effected by said preselected control rod withdrawal and said predicted power increase, and

(f) comparing the predicted axial offset with the selected axial offset limit and when said predicted axial offset is less than or equal to the selected axial offset limit, using the predicted power increase as the amount the power can be increased through repositioning of the control rods and, when the predicted axial offset exceeds the selected axial offset limit, selecting a smaller preselected withdrawal of the control rods and repeating steps (d) through (f).

3. A method according to claim 1 or 2 wherein the step of determining the current axial offset response characteristic of the generating unit includes the steps of:

storing a plurality of families of curves, each representing the generating unit axial offset response characteristic as a function of control rod position and power level for a selected reactor xenon distribution.

selecting the family of curves that most closely represents the relationship between the current measured values of rod position, axial offset and generating unit power level; and

wherein said step of determining from the axial offset response characteristic the predicted axial offset, includes selecting from said selected family of curves the curve corresponding to the increased power level and determining from said selected curve and the selected control rod position, the predicted axial offset.

4. A method according to claim 3 wherein the step of selecting the family of curves which most closely represents the relationship between the measured values of rod position, axial offset and power level includes the steps of:

selecting from each family of curves the curve corresponding to the current power level;

determining from each selected curve an expected value of the axial offset at the measured value of control rod position; and

selecting as the selected family of curves that family associated with the selected power curve which minimizes the difference between the expected axial offset and the measured axial offset.

5. A method according to claim 4 including the step of adjusting the selected family of curves by applying as a bias to the axial offset values for said curves, the difference between the measured axial offset and the expected axial offset determined from said selected curve of said selected family of curves.

6. A method according to claim 3, 4 or 5, wherein the step of storing families of curves including storing a plurality of groups of families of curves, the families of curves of each group being associated with a selected core cycle burnup state of the reactor, and wherein the step of selecting the family of curves that most closely represents the relationship between the current measured values of rod position, axial offset and generating unit power level includes as a first step selecting the group of families of curves associated with the current core cycle burnup state.

7. A method according to any of claims 2—6 including following the step of determining the amount that the power level can be increased through a change in reactor coolant temperature, the steps of:

modifying the selected axial offset limit to the maximum axial offset allowable at the predicted total power level, which is the sum of the current power level and the total increase in power available through rod control and through drop in reactor coolant temperature; and

repeating all of the steps after step (b) of claim 2.

8. A method according to claim 7 wherein selected axial offset limit is modified in accordance with the following relationship:

$$A.O._M = TAO + \frac{TBHI}{P_{TU} + P_{UP}}$$

where:

$TAO$ = target axial offset;

$TBHI$ = allowed positive deviation from TAO at full power;

$P_{TU}$ = current power level;

$P_{UP}$ predicted total increase in power available from rod control and through a drop in reactor coolant temperature.

9. A method according to any of claims 2—8 wherein the step of determining the predicted power increase comprises the steps of:

determining $\Delta R_p$, the change in rod position, as the difference between the selected rod position and the measured rod position;

converting $\Delta R_p$ to a reactivity change, $\Delta\rho$; and

determining the increased power level as a function of the reactivity change, $\Delta\rho$.

10. A method according to claim 9 wherein the step of converting the change in rod position $R_p$ to a reactivity change, $\Delta\rho$, comprises the steps of:

storing an integral rod worth curve representative of the relationship between rod position and the percent change in reactivity effected by a change in rod position for the current reactor core cycle burnup condition; and

**0 097 488**

determining from the integral rod worth curve the percent change in reactivity to be effected by the change in rod position $\Delta R_p$.

11. A method according to claim 10 wherein the step of determining the increased power level as a function of the reactivity change, $\Delta\rho$, includes:

storing a power defect curve representative of the relationship between the power output and the percent change in reactivity for the current reactor core cycle burnup condition; and

determining from the power defect curve the increased power level to be effected from the reactivity change, $\Delta\rho$.

12. A method according to claim 11 wherein the steps of storing said integral rod worth curves and said power defect curves include the steps of storing a plurality of each of said curves each for a selected core cycle burnup condition of the reactor and wherein the steps for determining the reactivity change, $\Delta\rho$, and the increased power level include as a first step selecting the appropriate curve associated with the current core cycle burnup condition.

13. A method according to any of the preceding claims wherein the step of determining the amount that the power level can be increased as a result of a change in reactor coolant temperature comprises the steps of:

generating a function defining the change in power as a function of reactor coolant temperature;

selecting limits for said temperature related power change function;

determining the maximum value for said temperature related power change function as permitted by said limits; and

setting the power level available as a result of a change in reactor coolant temperature equal to said maximum value.

14. A method according to claim 13 wherein said limits include turbine throttle value saturation limits and at least one of the core safety limits and steam moisture carryover limits.

15. A method according to claim 13 or 14 wherein the step of generating a function defining change in power as a function of reactor coolant temperature includes the steps of selecting as the initial conditions for said function a selected deviation from a programmed value for coolant temperature, and the sum of the current power level and the increase in power available through rod movement.

16. A method according to claim 15 wherein the initial temperature deviation from the programmed temperature is selected as the more negative of 1) the difference between the programmed temperature and the measured reactor coolant temperature, and 2) a preselected typical reactor coolant temperature deviation from the programmed temperature during a rapid power increase on control rods.

17. A method according to claim 16 wherein the preselected typical reactor coolant temperature deviation from the programmed temperature is about $-2,2°C$ ($-4°$ Fahrenheit).

18. A method according to claim 16 or 17 wherein the said function defining the change in power as a function of reactor coolant temperature has a slope equal to the reactor power coefficient divided by the average reactor moderator temperature coefficient.

19. A method according to claim 15, 16 or 17 wherein said selected limits are defined as functions of reactor coolant temperature and power level and said functions are solved simultaneously with said function defining the change in power as a function of reactor coolant temperature to determine the maximum power change permitted by said limits.

20. A method according to claim 19 wherein the slope of the function defining the change in power as a function of reactor coolant temperature is equal to the reactor power coefficient divided by the average of the moderator temperature coefficient at the initial conditions and at said maximum power level.

21. A method according to any of claims 13—20 wherein said selected limits are defined by the equations:

$$\Delta_T = a + b\ P_{TOT}$$

and

$$\Delta_T = a_1 + b_1\ P_{TOT}$$

where $P_{TOT}$ is the total power including the change due to a drop in reactor coolant temperature and $a$, $b$, $a_1$ and $b_1$ are constants.

22. A method according to claim 21 wherein said function defining the change in power as a function of reactor coolant temperature is defined by the equation:

$$\Delta_T = a_2 + b_2\ P_{TOT}$$

where:

$$b_2 = \frac{\alpha_p\ (\text{power coefficient})}{\alpha_m\ (\text{moderator temperature coefficient})}$$

and

$$a_2 = \Delta T_{IC} - b_2\ P_{IC}$$

where:

13

$P_{IC}$ = the power level after the change in power through rod movement; and

$\Delta T_{IC}$ = the deviation in the temperature from a programmed value after the change in power through rod movement.

23. A method according to claim 22 wherein the power coefficient $\alpha_p$ is defined by the equation:

$$\alpha_p = K_1 + K_2\, P_{TOT}$$

wherein $K_1$ and $K_2$ are constants.

24. A method according to claim 23 wherein the moderator coefficient $\alpha_m$ is defined by the relationship:

$$\alpha_m = \frac{\alpha mic + \alpha mf}{2}$$

and

$\alpha mic$ = $a_3 + b_3\, P_{IC}$
$a_3$ = $f(T, P_{IC})$
$b_3$ = $f(T, P_{IC})$
$\alpha mf$ = $a_4 + b_4\, P_{TOT}$
$a_4$ = $f(T_F, P_{TOT})$
$b_4$ = $f(T_F, P_{TOT})$
$T_F$ = $\Delta T + T_{PROG.\ F}$
$T_{PROG,F}$ = $T_{NL} + K_3\, P_{TOT}$

where:

T = measured coolant temperature
$T_F$ = reactor coolant temperature at $P_{TOT}$
$T_{NL}$ = no load coolant temperature
$K_3$ = a constant

and wherein the above equations and those of claims 22 and 23 are solved simultaneously with each of the equations of claim 21 to determine the value of $P_{TOT}$ at the intersection of each of the limit functions and the function defining the change in power as a function of reactor coolant temperature and selecting the smaller value of $P_{TOT}$ as the total power available.

**Patentansprüche**

1. Verfahren zur Steuerung einer mit Kernbrennstoff betriebenen Stromversorgungsanlage, bestehend aus einem Kernreaktor mit Steuerstäben, die selektiv im Reaktorkern angeordnet werden können, um die Reaktivität des Reaktors zu steuern, und einem Reaktorkühlmittel, das als Wärmeübertragungsmedium zwischen dem Reaktorkern und einer Stromversorgungsanlage dient, die ihrerseits einen Turbogenerator aufweist, und zwar durch innerhalb einer Zeitspanne beendete Leistungsänderungen, während der sich der Xenonspiegel im Reaktor nicht nennenswert ändert, wobei

die gegenwärtige Leistungshöhe des Reaktors und die Axialverschiebung,
die gegenwärtige Steuerstabposition; und
die Temperatur des Reaktorkühlmittels gemessen werden;
die zusätzliche Grösse bestimmt wird, um die die Leistungshöhe durch eine Änderung der Temperatur des Reaktorkühlmittels während der Zeitspanne erhöht werden kann,
dadurch gekennzeichnet, dass man auf einer On-Line-Echtzeitbasis von der gemessenen Leistungshöhe, der Axialverschiebung und der Stabposition die maximale Grösse bestimmt, um die die Leistung innerhalb der Zeitspanne über die gegenwärtige Leistungshöhe durch Wiedereinrichten der Steuerstäbe gesteigert werden kann;
eine Leistungsänderung für die Anlage auswählt und durchführt, einschliesslich eines Anstiegs der Leistung bis zu einem vorausgesagten gesamten Leistungsanstieg, der der Gesamtgrösse entspricht, um die die Leistung durch die Wiedereinrichtung der Steuerstäbe und durch eine Änderung der Temperatur des Reaktor-Kühlmittels erhöht werden kann; und
die Anlage betrieben wird, um die Leistungshöhe von der gegenwärtigen Leistungshöhe durch die gewählte Änderung in der Leistung zu ändern.

2. Verfahren nach Anspruch 1, bei dem die Stufe zur Bestimmung des möglichen Leistungsanstiegs durch die Wiedereinrichtung der Steuerstäbe folgende Schritte umfasst:

(a) Erzeugen einer Darstellung der gegenwärtigen Antwortcharakteristiken der Axialverschiebung der Kraftanlage als Funktion der gegenwärtigen Leistungshöhe und Stabposition von den gegenwärtig gemessenen Werten der Stabposition, Axialverschiebung und Leistungshöhe;

(b) Auswählen einer Grenze für die Axialverschiebung;

(c) Auswählen einer vorbestimmten Strecke, un die die Steuerstäbe zurückgezogen werden;

0 097 488

(d) Bestimmen des vorausgesagten Leistungsanstiegs, der mit der vorgewählten Rückzugsstrecke der Steuerstäbe verfügbar ist;

(e) Bestimmen der vorausgesagten Axialverschiebung aus der Antwortcharakteristik, die durch den vorgewählten Rückzug des Steuerstabes und des vorausgesagten Leistungsanstiegs bewirkt würde;

(f) Vergleich der vorausgesagten Axialverschiebung mit der ausgewählten Axialverschiebungsgrenze, wobei dann, wenn diese vorausgesagte Axialverschiebung kleiner als oder gleich ist wie die ausgewählte Axialverschiebungsgrenze, die vorausgesagte Leistungshöhe als die Grösse genommen wird, um die die Leistung durch Wiedereinrichtung der Steuerstäbe erhöht werden kann, und wenn die vorausgesagte Axialverschiebung die ausgewählte Axialverschiebungsgrenze übersteigt, ein kleiner ausgewählter Rückzug der Steuerstäbe gewählt wird und die Schritte (d) bis (f) wiederholt werden.

3. Verfahren nach Anspruch 1 oder 2, bei dem in der Stufe zum Bestimmen der gegenwärtigen Antwortcharakteristik der Axialverschiebung der Generatoranlage eine Veilzahl von Kurvenfamilien gespeichert wird, von denen jede die Antwortcharakteristik der Axialverschiebung der Generatoranlage als Funktion der Steuerstabposition und der Leistungshöhe für eine gewählte Xenon-Verteilung des Reaktors repräsentiert;

die Kurvenfamilie ausgewählt wird, die am genauesten die Beziehung zwischen den gegenwärtig gemessenen Werten der Stabposition, Axialverschiebung und Leistungshöhe der Generatoranlage repräsentiert; und

worin beim Schritt zum Bestimmen der vorausgesagten Axialverschiebung von der Antwortcharakteristik dieser Verschiebung, die Kurve aus der gewählten Kurvenfamilie ausgesucht wird, die der angestiegenen Leistungshöhe entspricht und aus dieser ausgesuchten Kurve und der gewählten Steuerstabposition die vorausgesagte Axialverschiebung bestimmt wird.

4. Verfahren nach Anspruch 3, dadurch gekennzeichnet, dass beim Auswählen der Kurvenfamilie, die die Beziehung zwischen den gemessenen Werten der Stabposition, der Axialverschiebung und der Leistungshöhe am genauesten repräsentiert,

aus jeder Kurvenfamilie die Kurve ausgesucht wird, die ger gegenwärtigen Leistungshöhe entspricht;

aus jeder ausgesuchten Kurve ein erwarteter Wert der Axialverschiebung bei dem gemessenen Wert der Steuerstabposition ermittelt wird; und

als ausgewählte Kurvenfamilie diejenige ausgesucht wird, die der gewählten Leistungskurve zugeordnet ist, welche die Differenz zwischen der erwarteten und der gemessen Axialverschiebung verringert.

5. Verfahren nach Anspruch 4, dadurch gekennzeichnet, dass die gewählte Kurvenfamilie eingestellt wird, indem als Gegenkraft zu den Werten der Axialverschiebung für diese Kurven die Differenz der gemessenen Axialverschiebung und der erwarteten Axialverschiebung aufgebracht wird, die von der aus der gewählten Kurvenfamilie ausgesuchten Kurve ermittelt wurde.

6. Verfahren nach Anspruch 3, 4 oder 5, dadurch gekennzeichnet, dass beim Speichern der Kurvenfamilien eine Vielzahl von Gruppen dieser Kurvenfamilien gespeichert wird, wobei die Kurvenfamilien einer jeden Gruppe einem ausgesuchten Kernzyklus-Abbrandstadium des Reaktors zugeordnet werden, und wobei die Auswahl der Kurvenfamilie, die die genaueste Beziehung zwischen den gegenwärtig gemessenen Stabpositionswerten, der Axialverschiebung und der Leistungshöhe der Generatoranlage wiedergibt, als ersten Schritt die Auswahl der Gruppe der Kurvenfamilie umfasst, die dem gegenwärtigen Kernzyklus-Abbrandstadium zugeordnet ist.

7. Verfahren nach einem der Ansprüche 2 bis 6, dadurch gekennzeichnet, dass nach dem Ermitteln der Grösse, um den die Leistungshöhe mittels einer Änderung der Reaktorkühltemperatur erhöht werden kann,

die gewählte Axialverschiebungsgrenze zu der Axialverschiebung modifiziert wird, die bei der vorausgesagten gesamten Leistungshöhe zulässig ist, die die Summe der gegenwärtigen Leistungshöhe und des gesamten Anstiegs darstellt, der durch Stabsteuerung und Absinken der Reaktorkühltemperatur verfügbar ist; und

die Schritte nach der Stufe (b) des Anspruch 2 wiederholt werden.

8. Verfahren nach Anspruch 7, dadurch gekennzeichnet, dass die gewählte Axialverschiebungsgrenze entsprechend der folgenden Beziehung modifiziert wird:

$$A.O._M = TAO + \frac{TBHI}{P_{TU.} + P_{UP}}$$

worin

TAO = Ziel-Axialverschiebung

TBHI = zulässige positive Abweichung von TAO bei voller Leistung;

$P_{TU}$ = gegenwärtige Leistungshöhe

$P_{UP}$ = vorausgesagte Gesamterhöhung der von der Kernsteuerung und durch einen Abfall der Reaktor-Kühltemperatur verfügbaren Leistung.

9. Verfahren nach einem der Ansprüche 2 bis 8, dadurch gekennzeichnet, dass beim Bestimmen des vorausgesagten Leistungsanstiegs

15

# 0 097 488

$\Delta R_p$, die Änderung der Stabposition, als Differenz zwischen der gewählten und der gemessenen Stabposition bestimmt wird;

$\Delta R_p$ in eine Reaktivitätsänderung, $\Delta_p$, umgewandelt; und

der Anstieg der Leistungshöhe als eine Funktion der Reaktivitätsänderung, $\Delta_p$, bestimmt wird.

10. Verfahren nach Anspruch 9, dadurch gekennzeichnet, dass bei der Umwandlung der Änderung der Stabposition $R_p$ in eine Reaktivitätsänderung, $\Delta_p$,

eine integrale Stabwertkurve gespeichert wird, die für die Beziehung zwischen der Stabposition und der Prozent-Änderung der Reaktivität repräsentativ ist, die durch eine Änderung für die gegenwärtige Reaktorkernzyklus-Abbrandbedingung bewirkt wird; und

aus der integralen Stabwertkurve die Prozentänderung der Reaktivität ermittelt wird, die durch die Änderung der Stabposition $\Delta R_p$ bewirkt werden soll.

11. Verfahren nach Anspruch 10, dadurch gekennzeichnet, dass bei der Bestimmung des Anstiegs der Leistungshöhe als eine Funktion der Reaktivitätsänderung, $\Delta p$,

eine Leistungsfehlerkurve gespeichert wird, die für die Beziehung zwischen der Leistungsabgabe und der Prozentänderung der Reaktivität für die gegenwärtige Reaktorkernzyklus-Abbrandbedingung repräsentativ ist; und

aus der Leistungsfehlerkurve der Anstieg der Leistungshöhe ermittelt wird, der aus der Reaktivitätsänderung, $\Delta p$, bewirkt werden soll.

12. Verfahren nach Anspruch 11, dadurch gekennzeichnet, dass beim Speichern der integralen Stabwertkurven und der Leistungsfehlerkurven eine Vielzahl jeder dieser Kurven gespeichert wird, jede für eine ausgesuchte Kernzyklus-Abbrandbedingung des Reaktors, und beim Bestimmen der Rekativitätsänderung, $\Delta p$, und der angestiegenen Leistungshöhe, zunächst die entsprechende Kurve gewählt wird, die der gegenwärtigen Kernzyklus-Abbrandbedingung zugeordnet ist.

13. Verfahren nach einem der vorhergehenden Ansprüche, dadurch gekennzeichnet, dass beim Bestimmen der Grösse, um welche die Leistungshöhe als Ergebnis einer Änderung der Reaktorkühltemperatur erhöht werden kann,

eine Funktion erzeugt wird, die die Änderung in Leistung als eine Funktion der Reaktorkühltemperatur definiert;

Grenzen für die mit der Leistungsänderungsfunktion zusammenhängende Temperatur selektiert werden;

die Leistungshöhe festgesetzt wird, die als Ergebnis einer Änderung in der Reaktorkühltemperatur verfügbar ist, die dem maximalen Wert entspricht.

14. Verfahren nach Anspruch 13, dadurch gekennzeichnet, dass diese Grenzen den Wert der Grenzen der Turbinendrosselsättigung und mindestens eine der Grenzen der Kernsicherheit und der Grenzen der Dampffeuchtigkeitsmitnahme umfassen.

15. Verfahren nach Anspruch 13 oder 14, dadurch gekennzeichnet, dass beim Erzeugen einer die Leistungsänderung als Funktion der Reaktorkühlmitteltemperatur definierenden Funktion, als deren Anfangsbedingungen eine gewählte Abweichung von einem programmierten Wert der Kühlmitteltemperatur, und die Summe der gegenwärtigen Leistungshöhe und der durch Stabbewegung verfügbaren Leistungsanstiegs ausgesucht werden.

16. Verfahren nach Anspruch 15, dadurch gekennzeichnet, dass die anfängliche Temperaturabweichung von der programmierten Temperatur als die negativere von 1) der Differenz zwischen der programmierten Temperatur und der gemessenen Reaktorkühlmitteltemperatur, und 2) eine vorgewählte typische Abweichung der Reaktorkühlmitteltemperatur von der programmierten Temperatur während eines rapiden Leistungsanstiegs an den Steuerstäben ausgesucht werden.

17. Verfahren nach Anspruch 16, dadurch gekennzeichnet, dass die Abweichung der vorgewählten typischen Reaktorkühlmitteltemperatur von der programmierten Temperatur etwa $-2.2°C$ $(-4°F)$ beträgt.

18. Verfahren nach Anspruch 16 oder 17, dadurch gekennzeichnet, dass die Funktion, die die Leistungsänderung als Funktion der Reaktorkühlmitteltemperatur definiert, einen Abfall aufweist, der dem Reaktorleistungskoeffizienten dividiert durch das Mittel des Reaktormoderator-Temperaturkoeffizienten entspricht.

19. Verfahren nach Anspruch 15, 16 oder 17, dadurch gekennzeichnet, dass die gewählten Grenzen als Funktionen der Reaktorkühlmitteltemperatur und der Leistungshöhe definiert sind und diese Funktionen gleichzeitig mit der Funktion gelöst werden, die die Leistungsänderung als eine Funktion der Reaktorkühlmitteltemperatur definiert, um das Maximum der durch diese Grenzen erlaubten Leistungsänderungen zu bestimmen.

20. Verfahren nach Anspruch 19, dadurch gekennzeichnet, dass der Abfall der Funktion, die die Leistungsänderung als eine Funktion der Reaktorkühlmitteltemperatur definiert, dem Reaktorleistungskoeffizienten dividiert durch das Mittel des Moderatortemperaturkoeffizienten bei den Anfangsbedingungen und bei der maximalen Leistungshöhe entspricht.

21. Verfahren nach einem der Ansprüche 13 bis 20, dadurch gekennzeichnet, dass die gewählten Grenzen durch die Gleichungen

$$\Delta_T = a + bP_{TOT}$$

$$\Delta_T = a_1 + b_1 P_{TOT}$$

16

definiert sind, worin $P_{TOT}$ die Gesamtleistung einschliesslich der Änderung aufgrund eines Abfalls in der Reaktorkühlmitteltemperatur darstellt und a, b, $a_1$ und $b_1$ Konstante sind.

22. Verfahren nach Anspruch 21, dadurch gekennzeichnet, dass die Funktion, die die Änderung in der Leistung als eine Funktion der Reaktorkühlmitteltemperatur angibt, durch die Gleichung definiert ist:

$$\Delta_T = a_2 + b_2\ P_{TOT}$$

. worin

$$b_2 = \frac{\alpha_p\ (\text{Leistungskoeffizient})}{\alpha_m\ (\text{Moderatortemperaturkoeffizient})}$$

und

$$a_2 = \Delta T_{IC} - b_2 P_{IC}$$

worin

$P_{IC}$ = Die Leistungshöhe nach der Leistungsänderung durch Stabbewegung; und

$\Delta T_{IC}$ = die Abweichung in der Temperatur von einem programmierten Wert, nach der Leistungsänderung durch Stabbewegung.

23. Verfahren nach Anspruch 22, dadurch gekennzeichnet, dass der Leistungskoeffizient

$\alpha_P$ durch die Gleichung

$$\alpha_P = K_1 + K_2\ P_{TOT}$$

definiert ist, worin $K_1$ und $K_2$ Konstante darstellen.

24. Verfahren nach Anspruch 23, worin der Moderatorkoeffizient $\alpha_m$ durch die Beziehung definiert ist:

$$\alpha_m = \frac{\alpha mic + \alpha mf}{2}$$

und

$\alpha mic$ = $a_3 + b_3\ P_{IC}$

$a_3$ = $f(T, P_{IC})$

$b_3$ = $f(T,\ P_{IC})$

$mf$ = $a_4 + b_4\ P_{TOT}$

$a_4$ = $f(T_E,\ P_{TOT})$

$b_4$ = $f(T_E,\ P_{TOT})$

$T_E$ = $\Delta T + T_{PROG,\ E}$

$T_{PROG,\ E} = T_{NL} + K_3\ P_{TOT}$

worin

$T$ = gemessene Kühlmitteltemperatur

$T_E$ = Reaktorkühlmitteltemperatur bei $P_{TOT}$

$T_{NL}$ = Leerlauf-Kühlmitteltemperatur

$K_3$ = eine Konstante

darstellen und worin die obigen Gleichungen und diejenigen gemäss Anspruch 22 und 23 gleichzeitig mit jeder er Gleichungen gemäss Anspruch 21 gelöst werden, um den Wert von $P_{TOT}$ beim Schnittpunkt einer jeden der Grenzfunktionen und der Funktion, die die Leistungsänderung als eine Funktion der Reaktorkühlmitteltemperatur definiert, zu bestimmen und den kleineren Wert von $P_{TOT}$ als gesamte verfügbare Leistung auszusuchen.

**Revendications**

1. Procédé de commande d'une unité génératrice de puissance électrique à combustible nucléaire comprenant un réacteur nucléaire comportant des barres de commande qui peuvent être positionnées sélectivement dans le coeur du réacteur pour régir la réactivité du réacteur et comportant un fluide de refroidissement de réacteur qui sert de milieu de transfert de chaleur entre le coeur du réacteur et un générateur de puissance électrique comprenant un groupe turbo-générateur, par des variations de puissance achevées en une durée pendant laquelle le taux de xénon dans le réacteur ne se modifie pas de manière sensible, ce procédé comprenant les opérations suivantes:

la mesure du niveau de puissance du moment du réacteur et le décalage axial,

la mesure de la position du moment des barres de commande,

**0 097 488**

la mesure de la température du fluide de refroidissement du réacteur,

la détermination de la mesure dans laquelle le niveau de puissance peut être accru en supplément par une modification de la température de fluide de refroidissement du réacteur pendant la dite durée,

caractérisé en ce qu'on détermine sur une base directe en temps réel à partir du niveau de puissance mesuré, du décalage axial et de la position des barres, la quantité maximum de laquelle la puissance peut être accrue par rapport au niveau de puissance du moment dans la dite durée par un repositionnement des barres de commande,

on sélectionne et on effectue une modification de puissance pour la centrale comprenant une augmentation de puissance allant jusqu'à une augmentation de puissance totale prédite égale à la quantité totale de laquelle la puissance peut être accrue par un repositionnement des barres de commande et par une modification de la température de fluide de refroidissement du réacteur, et

on fait fonctionner la centrale pour modifier le niveau de puissance à partir du niveau du moment de la modification de puissance sélectionnée.

2. Procédé suivant la revendication 1, selon lequel l'opération consistant à déterminer la capacité d'augmentation de puissance par le repositionnement des barres de commande comprend les opérations suivantes:

(a) la production d'une représentation des caractéristiques de réponse en décalage axial du moment de la centrale en fonction du niveau de puissance et de la position des barres du moment à partir des valeurs mesurées de la position des barres, du décalage axial et du niveau de puissance,

(b) la sélection d'une limite pour le décalage axial,

(c) la sélection d'un retrait prédéterminé des barres de commande,

(d) la détermination de l'augmentation de puissance prédit pouvant être obtenue par le dit retrait présélectionné des barres de commande,

(e) la détermination à partir de la caractéristique de réponse en décalage axial, du décalage axial prédit qui résulterait du retrait présélectionné des barres de commande et de la dite augmentation de puissance prédite, et

(f) la comparaison du décalage axial prédit à la limite de décalage axial sélectionnée et, lorsque le décalage axial prédit est inférieur ou égal à la limite de décalage axial sélectionnée, l'utilisation de l'augmentation de puissance prédite comme quantité de laquelle la puissance peut être accrue par repositionnement des barres de commande et, lorsque le décalage axial prédit excède la limite de décalage axial sélectionnée, la sélection d'un retrait présélectionné plus faible des barres de commande et la répétition des opérations (d) à (f).

3. Procédé suivant la revendication 1 ou 2, dans lequel la détermination de la caractéristique de réponse en décalage axial du moment de l'unité génératrice comprend les opérations suivantes:

la mémorisation de plusieurs familles de courbes représentant chacune la caractéristique de réponse en décalage axial de l'unité génératrice en fonction de la position des barres de commande et du niveau de puissance pour une distribution sélectionnée du xénon dans le réacteur,

la sélection de la famille de courbes qui représente au mieux la relation entre les valeurs mesurées du moment de la position des barres, du décalage axial et du niveau de puissance de l'unité génératrice, et

dans lequel l'opération de détermination, à partir de la caractéristique de réponse en décalage axial, du décalage axial prédit implique la sélection, à partir de la famille de courbes sélectionnée, de la courbe correspondant au niveau de puissance accru et la détermination, à partir de la courbe sélectionnée et de la position sélectionnée des barres de commande, du décalage axial prédit.

4. Procédé suivant la revendication 3, dans lequel l'opération de sélection de la famille de courbes qui représente au mieux la relation entre les valeurs mesurées de la position des barres, du décalage axial et du niveau de puissance comprend les opérations suivantes:

la sélection, à partir de chaque famille de courbes, de la courbe correspondant au niveau de puissance du moment,

la détermination, à partir de chaque courbe sélectionnée, d'une valeur attendue du décalage axial à la valeur mesurée de la position des barres de commande, et

la sélection, à titre de famille de courbes sélectionnée, la famille associée à la courbe de puissance sélectionnée qui réduit au minimum la différence entre le décalage axial attendu et le décalage axial mesuré.

5. Procédé suivant la revendication 4, qui comprend l'opération consistant à ajuster la famille sélectionnée de courbes en appliquant, à titre de sollicitation vers les valeurs de décalage axial pour ces courbes, la différence entre le décalage axial mesuré et le décalage axial attendu déterminé à partir de la courbe sélectionnée de la famille de courbes sélectionnée.

6. Procédé suivant la revendication 3, 4 ou 5, dans lequel l'opération de mémorisation de familles de courbes comprend la mémorisation de plusieurs groupes de familles de courbes, les familles de courbes de chaque groupe étant associées à un état sélectionné de combustion cyclique dans le coeur du réacteur, et dans lequel l'opération de sélection de la famille de courbes qui représente au mieux la relation entre les valeurs mesurées du moment de la position des barres, du décalage axial et du niveau de puissance de l'unité génératrice comprend, à titre a première opération, la sélection du groupe de familles de courbes associé à l'état de combustion cyclique du moment dans le coeur.

7. Procédé suivant l'une quelconque des revendications 2 à 6 comprenant, après l'opération de

18

**0 097 488**

détermination de la quantité de laquelle le niveau de puissance peut être accru par une modification de la température du fluide de refroidissement du réacteur, les opérations suivantes:

la modification de la limite de décalage axial sélectionnée jusqu'au décalage axial maximum admissible pour le niveau de puissance total prédit, qui est la somme du niveau de puissance du moment et du total de l'accroissement de puissance pouvant être obtenu par commande au moyen des barres et par un abaissement de la température du fluide de refroidissement du réacteur, et

la répétition de toutes les opérations suivant l'opération (b) de la revendication 2.

8. Procédé suivant la revendication 7, dans lequel la limite de décalage axial sélectionnée est modifiée selon la relation suivante:

$$A.O._M = TAO + \frac{TBHI}{P_{TU} + P_{UP}}$$

où

$TAO$ = décalage axial recherché,
$TBHI$ = écart positif admis par rapport à TAO à pleine puissance,
$P_{TU}$ = niveau de puissance du moment,
$P_{UP}$ = total de l'accroissement de puissance prédit pouvant être obtenu par commande au moyen des barres et par un abaissement de la température du fluide de refroidissement du réacteur.

9. Procédé suivant l'une quelconque des revendications 2 à 8, dans lequel l'opération de détermination de l'accroissement de puissance prédit comprend les opérations suivantes:

la détermination de $\Delta R_p$, la variation de position des barres, sous la forme de la différence entre la position sélectionnée des barres et la position mesurée des barres,

la conversion $\Delta R_p$ en une variation de réactivité, $\Delta\rho$, et

la détermination du niveau de puissance accru en fonction de la variation de réactivité, $\Delta\rho$.

10. Procédé suivant la revendication 9, dans lequel l'opération de conversion de la variation de position des barres $R_p$ en une variation de réactivité, $\Delta\rho$, comprend les opérations suivantes:

la mémorisation d'une courbe de valeur intégrale des barres représentative de la relation entre la position des barres et le pourcentage de variation de réactivité obtenue par une modification de la position des barres pour l'état du moment de la combustion cyclique dans le coeur du réacteur, et

la détermination à partir de la courbe de valeur intégrale des barres le pourcentage de variation de réactivité qui sera obtenu par la variation de position des barres $\Delta R_p$.

11. Procédé suivant la revendication 10, dans lequel l'opération de détermination du niveau de puissance accru en fonction de la variation de réactivité, $\Delta\rho$, comprend:

la mémorisation d'une courbe de manque de puissance représentative de la relation existant entre la sortie de puissance et le pourcentage de variation de réactivité pour l'état de combustion cyclique du moment dans le coeur du réacteur, et

la détermination, à partir de la courbe de manque de puissance, du niveau de puissance accru qui sera obtenu à partir de la variation de réactivité $\Delta\rho$.

12. Procédé suivant la revendication 11, dans lequel les opérations de mémorisation des courbes de valeur intégrale des barres et des courbes de manque de puissance comprennent le stockage de plusieurs de chacune de ces courbes chaque fois associées à un état de combustion cyclique sélectionné dans le coeur du réacteur et dans lequel les opérations de détermination de la variation de réactivité $\Delta\rho$ et du niveau de puissance accru comprennent comme première opération, la sélection de la courbe appropriée associée à l'état de combustion cyclique du moment dans le coeur.

13. Procédé suivant l'une quelconque des revendications précédentes, dans lequel l'opération de détermination de la quantité de laquelle le niveau de puissance peut être accru en conséquence d'une variation de la température du fluide de refroidissement du réacteur comprend les opérations suivantes:

la production d'une fonction définissant la variation de puissance en fonction de la température du fluide de refroidissement du réacteur,

la sélection de limites pour cette fonction de variation de puissance rapportée à la température,

la détermination de la valeur maximum pour cette fonction de variation de puissance rapportée à la température permise par ces limites, et

le réglage du niveau de puissance pouvant être obtenu en conséquence d'une variation de la température du fluide de refroidissement du réacteur sur une valeur égale à cette valeur maximum.

14. Procédé suivant la revendication 13, dans lequel les dites limites comprennent des limites de saturation de la valve d'étranglement de la turbine et au moins une des limites de sécurité du coeur et des limites d'entraînement de l'humidité par la vapeur.

15. Procédé suivant la revendication 13 ou 14, dans lequel l'opération de production d'une fonction définissant une variation de puissance en fonction de la température du fluide de refroidissement du réacteur comprend les opérations de sélection, à titre de conditions initiales pour cette fonction, d'un écart sélectionné à partir d'une valeur programmée pour la température du fluide de refroidissement et de la somme du niveau de puissance du moment et de l'accroissement de puissance pouvant être obtenu par déplacement des barres.

19

**0 097 488**

16. Procédé suivant la revendication 15, dans lequel l'écart de température initial à partir de la température programmée sélectionnée est la valeur la plus négative parmi (1) la différence entre la température programmée et la température mesurée du fluide de refroidissement du réacteur, et (2) un écart présélectionné type de la température du fluide de refroidissement du réacteur à partir de la température programmée pendant une augmentation de puissance rapide au moyen des barres de commande.

17. Procédé suivant la revendication 16, dans lequel l'écart présélectionné type de la température du fluide de refroidissement du réacteur à partir de la température programmée est d'environ $-2,2°C\ (-4°F)$.

18. Procédé suivant la revendication 16 ou 17, dans lequel la dite fonction définissant la variation de puissance en fonction de la température du fluide de refroidissement du réacteur présente une pente égale au coefficient de puissance du réacteur divisé par le coefficient de température du modérateur du réacteur moyen.

19. Procédé suivant la revendication 15, 16 ou 17, dans lequel les limites sélectionnées sont définies comme étant des fonctions de la température du fluide de refroidissement du réacteur et du niveau de puissance et ces fonctions sont résolues en même temps que la fonction définissant la variation de puissance en fonction de la température du fluide de refroidissement du réacteur pour déterminer la variation de puissance maximum permise par ces limites.

20. Procédé suivant la revendication 19, dans lequel la pente de la fonction définissant la variation de puissance en fonction de la température du fluide de refroidissement du réacteur est égale au coefficient de puissance du réacteur divisé par la moyenne du coefficient de température du modérateur dans les conditions initiales et au dit niveau de puissance maximum.

21. Procédé suivant l'une quelconque des revendications 13 à 20, dans lequel les limites sélectionnées sont définies par les équations:

$$\Delta_T = a + b\ P_{TOT}$$

et

$$\Delta_T = a_1 + b_1\ P_{TOT}$$

où $P_{TOT}$ est la puissance totale, y compris la variation due à une chute de la température du fluide de refroidissement du réacteur et $a$, $b$, $a_1$ et $b_1$ sont des constantes.

22. Procédé suivant la revendication 21, dans lequel la fonction définissant la variation de puissance en fonction de la température du fluide de refroidissement du réacteur est définie par l'équation:

$$\Delta_T = a_2 + b_2\ P_{TOT}$$

où:

$$b_2 = \frac{\alpha_p\ (\text{coefficient de puissance})}{\alpha_m\ (\text{coefficient de température du modérateur})}$$

et

$$a_2 = \Delta T_{IC} - b_2\ P_{IC}$$

où

$P_{IC}$ = le niveau de puissance après la variation de puissance due au déplacement des barres, et
$\Delta T_{IC}$ = l'écart de température à partir d'une valeur programmée après la variation de puissance due à un déplacement des barres.

23. Procédé suivant la revendication 22, dans lequel le coefficient de puissance $\alpha_p$ est défini par l'équation:

$$\alpha_p = K_1 + K_2\ P_{TOT}$$

où $K_1$ et $K_2$ sont des constantes.

24. Procédé suivant la revendication 23, dans lequel le coefficient $\alpha_m$ du modérateur est défini par la relation:

$$\alpha_m = \frac{\alpha mic + \alpha mf}{2}$$

et

$\alpha mic$ = $a_3 + b_3\ P_{IC}$
$a_3$ = $f(T,\ P_{IC})$
$b_3$ = $f(T,\ P_{IC})$

20

$$\alpha mf = a_4 + b_4\ P_{TOT}$$
$$a_4 = f(T_F,\ P_{TOT})$$
$$b_4 = f(T_F,\ P_{TOT})$$
$$T_F = \Delta T + T_{PROG,\ F}$$
$$T_{PROG,F} = T_{NL} + K_3\ P_{TOT}$$

où

$T$ = température mesurée du fluide de refroidissement

$TF$ = température du fluide de refroidissement du réacteur à $P_{TOT}$

$T_{NL}$ = température du fluide de refroidissement en l'absence de charge

$K_3$ = une constante

et dans lequel les équations qui précèdent et celles des revendications 22 et 23 sont résolues en même temps que chacune des équations de la revendication 21 pour déterminer la valeur de $P_{TOT}$ à l'intersection de chacune des fonctions de limites et de la fonction définissant la variation de puissance en fonction de la température de fluide de refroidissement du réacteur et la plus petite valeur de $P_{TOT}$ est sélectionnée comme puissance totale disponible.

FIG. 1

0 097 488

FIG. 2a

Box 55:
Axial Offset vs. Rod Position curves that correspond to the measured Turbine Power

$AO.$ ... $P_{TU}$ $Rp$ $(\triangle Xe)_1$  $AO.$ $P_{TU}$ $Rp$ $(\triangle Xe)_2$ ... $AO.$ $P_{TU}$ $Rp$ $(\triangle Xe)_k$

Measured Rod Position $(Rp)_m$

Box 57:
At the measured Rod Position $(Rp)_m$ use the A.O. vs. Rp curves to determine the expected Axial Offset $A.O._j$ at each available $(\triangle Xe)_j$, for $j=1,2,...k$

Box 59:
Expected Axial Offset $(AO_j)$ at each $(\triangle Xe)_j$, for $j=1,2$ and 3, and measured Rod Position $(Rp)_m$

$AO._1$ $P_{TU}$ $(\triangle Xe)_1$ $Rp$  $AO_2$ $P_{TU}$ $(\triangle Xe)_2$ $Rp$  $AO_3$ $P_{TU}$ $(\triangle Xe)_3$ $Rp$

FIG. 2b

0 097 488

(II) Measured Axial Offset $(AOm)$

With the measured Axial Offset $(AOm)$ find the expected Axial Offset $(AO_i)$ that minimizes $|AOm - AO_i|$ for $i = 1,2,3$. Label the minimizing $AO_i$ and corresponding $(\triangle Xe)_i$ as:

$$\widetilde{AO} \text{ and } \widetilde{\triangle Xe}$$

61

Choose the family of Axial Offset vs. Rod Position curves that corresponds to the Xenon Distribution $\widetilde{\triangle Xe}$

63

69 — With $\widetilde{AO}$, determine the Axial Offset Bias $(\triangle AO)$ at Rp according to $\triangle AO = |AOm - \widetilde{AO}|$

Family of Axial Offset $(AO)$ vs. Rod Position $(Rp)$ curves that corresponds to the Xenon Distribution $\widetilde{\triangle Xe}$

65

$P_{j+1}$
$P_j$
$P_{j-1}$

AO

$\widetilde{\triangle Xe}$ Rp

(IIIa)

(IIIb)

FIG. 2c

0 097 488

(IIIa)   (IIIb)

Denote the above family of curves by

$$AO' = f\left(R_p, R_l\right)_{\widehat{\Delta X_e}}$$   —67

$$AO' = f\left(R_p, R_l\right)_{\widehat{\Delta X_e}}$$   $\Delta AO$

—71

Adjust the family of AO vs. Rp curves according to $AO = AO' + \Delta AO$. or $AO = f\left(R_p, R_l\right)_{\widehat{\Delta X_e}} + \Delta AO$

Store this family of curves   —73

FIG. 2d

Target Axial Offset ( TAO )   Upper limit of the Target Band (TBHI)

Determine the max. or most positive Axial Offset ( AOmax.) at high power according to  $AOmax = TAO + TBHI$

— 75

Set the First Iteration Flag ( ITFIRST ) to 1
$$ITFIRST = 1$$

— 77

— 79

Is ITFIRST=1

Yes

No

Update AOmax according to
$$AOmax = TAO + \frac{TBHI}{P_{UP} + P_{TU}}$$

— 81

— 84

Assume rods can be fully withdrawn

$R_{PF}$

— 83

Calculate the total rod travel during return to power $(\triangle Rp)$ assuming rods can be fully withdrawn

$$\triangle Rp = R_{PF} - (Rp)m$$

where $R_{PF}$ = final rod position

— 85

$R_{PF}$

Calculate the total rod travel during the return to power $(\triangle Rp)$

$$\triangle Rp = R_{PF} - (Rp)m$$

FIG. 3a

ⅣV

Ⅴ Ⅹ

ⒾⓋ

ΔRp

Convert Rp to a Reactivity Change (Δρ) using the "Integral Rod Worth vs. Rod Position" curve —87

With Δρ determine the possible Upper Power Level (PF) attainable on rods alone using "Total Power Defect vs. Turbine Power" curve —91

Determine the Axial Offset (AOF) at RpF and PF using adjusted family of "Axial Offset vs. Rod Position" curves stored in block 73 —95

ⒾⓋₐ

FIG. 3b

Ⓥ

FIG. 3c

FIG. 4

FIG. 5

0 097 488

Ⓥ

The Power Level at the starting point of the Reduced Temperature Increase ($P_{IC}$) is :

$$P_{IC} = P_R + P_{TU}$$

⌐103

Calculate the Programmed Coolant Temperature ($T_{PROG}$) (either average, hot leg or cold leg)

$$T_{PROG} = T_{NL} + k_3 P_{IC},$$

where: $k_3$ is a known constant

$T_{NL}$ = No-Load coolant temperature (avg. hot or cold)

⌐105

Calculate the "Temperature Difference at the Starting Point of the Reduced Temperature Power Increase" ($\Delta T_{IC}$)

$$\Delta T_{IC} = \text{Minimum} \left( T - T_{PROG}, -4°F \right)$$

where: T = Measured coolant temp. (either avg. hot leg or cold leg)

⌐107

Determine the Moderator Temperature Coefficient, in pcm/°F at the start of the Reduced Temp. Power Increase ($\alpha_{MIC}$). Use the "Moderator Temp. Coeff. vs. Turbine Power" curve at the appropriate power ($P_{IC}$) and measured coolant temperature (T).

$$\alpha_{MIC} = f \left( T, P_{IC} \right)$$

⌐109

$\alpha_m$ BOL   $\alpha_m$ MOL   $\alpha_m$ EOL

⌐111

FIG.6

Ⅶ

VII

113

Set up the following relationships between various parameters with either $P_{TOT}$ and $\Delta T$

$\Delta T = a_2 + b_2 \, P_{TOT}$

$a_2 = \Delta T_{IC} - b_2 \, P_{IC}$

$b_2 = \dfrac{\text{Power Coefficient (pcm \% Power)}}{\text{Moderator Temperature Coefficient (pcm/°F)}} = \dfrac{\alpha_p}{\alpha_M}$

$\alpha_p = k_1 + k_2 \, P_{TOT}$ $(k_1, k_2$ are known constants$)$

$\alpha_M = \dfrac{\alpha_{MIC} + \alpha_{MF}}{2}$

$\alpha_{MF} = a_4 + b_4 \, P_{TOT}$

$a_4 = f(T_F, P_{TOT})$

$b_4 = f(T_F, P_{TOT})$

$T_F = \Delta T + T_{PROG,F}$

$T_{PROG,F} = T_{NL} + k_3 \, P_{TOT}$ $(k_3$ is a known constant$)$

VIII

## FIG. 7

$$\text{VIII}$$

Define the limits for a reduced temperature power increase:

$$\triangle T = a + b \cdot P_{TOT}$$
$$\triangle T = a_1 + b_1 \cdot P_{TOT}$$

115

Solve for $P_{TOT}$ by using the equations in block 113 & each of the equations of block 115

117

Select the smaller value of $P_{TOT}$ as $P_{FINAL}$

119

Determine the Power Increase available at 5% min. ($P_{UP}$)

$P_{UP} = $ Min. $\big[ (P_{FINAL} - P_{TU}), (P_{HI} - P_{TU}), \triangle P_{HI}, (P_{NOM} - P_{TU}),$ margin to DNB, margin to kw/ft. protection setpoint, BOP limitations $\big]$

121

$$\text{IX}$$

FIG. 8a

Go to FIG.3a

Ⅸ

**123**
Is
ITFIRST = 1?

Yes → **125** Save the calculated $P_{UP}$ ie $(P_{UP})$ saved = $P_{UP}$

**127** Set ITFIRST = 0

Ⅹ

No

**129**
Is
$|P_{UP} - (P_{UP})$ saved $| \leq k$
(for k some constant)

No → **131** Save the new $P_{UP}$ ie $(P_{UP})$ saved = $P_{UP}$

Yes

**133**
Is
this calculation for a
10% step power increase?

No → Stop

$P_{UP}$ = 5% / MINUTE
power increase
capability

Yes

**135** $P_{SU}$ = Minimum $(0.1, P_{UP})$

$P_{SU}$ = Step Power
increase capability

Stop

FIG. 8b

13